# EUROPEAN PATENT SPECIFICATION

(11) **EP 4 579 388 B1**
(45) Date of publication and mention of the grant of the patent: **28.10.2026**
(21) Application number: 24785960.6
(22) Date of filing: 09.09.2024
(51) Int. Cl.: G06F 1/16, H05K 1/14, H01F 7/02, H04M 1/02, H04M 1/03

(54) **MULTI-FOLDABLE ELECTRONIC DEVICE COMPRISING ELECTRONIC COMPONENT ARRANGEMENT STRUCTURE**
MEHRFACH FALTBARE ELEKTRONISCHE VORRICHTUNG MIT EINER ANORDNUNGSSTRUKTUR FÜR ELEKTRONISCHE KOMPONENTEN
DISPOSITIF ÉLECTRONIQUE MULTI-PLIABLE COMPRENANT UNE STRUCTURE D'AGENCEMENT DE COMPOSANTS ÉLECTRONIQUES

(30) Priority: 03.11.2023 KR 20230150669; 23.11.2023 KR 20230164746
(43) Date of publication of application: 02.07.2025
(73) Proprietor: Samsung Electronics Co., Ltd, Suwon-si, Gyeonggi-do 16677 (KR)
(72) Inventor: JUNG, Soli, Suwon-si, Gyeonggi-do 16677 (KR); KANG, Jeongho, Suwon-si, Gyeonggi-do 16677 (KR); KIM, Namwoo, Suwon-si, Gyeonggi-do 16677 (KR); KIM, Minho, Suwon-si, Gyeonggi-do 16677 (KR); PARK, Changi, Suwon-si, Gyeonggi-do 16677 (KR); AHN, Jaeuk, Suwon-si, Gyeonggi-do 16677 (KR); YOON, Yeonggyu, Suwon-si, Gyeonggi-do 16677 (KR); CHOI, Junyoung, Suwon-si, Gyeonggi-do 16677 (KR); HONG, Hyunchul, Suwon-si, Gyeonggi-do 16677 (KR); YOON, Byounguk, Suwon-si, Gyeonggi-do 16677 (KR)
(74) Representative: Gulde & Partner
(86) International application number: PCT/KR2024/013623
(87) International publication number: WO 2025/095336

(56) References cited:
- WO-A1-2023/173857
- CN-U- 213 072 751
- KR-A- 20190 041 065
- KR-A- 20200 038 535
- KR-A- 20210 064 616
- KR-A- 20210 157 737
- KR-B1- 102 582 486
- US-A1- 2020 366 770
- US-A1- 20240 397 649

## Description

### [Technical Field]

Embodiments of the disclosure relate to a multi-foldable electronic device including an electronic component arrangement structure.

### [Background Art]

Electronic devices are gradually becoming slimmer, and development is being carried out to enhance design aspects and to differentiate functional features. Electronic devices are being gradually transformed from a uniform rectangular shape into various shapes. An electronic device may have a transformable structure that is convenient to carry and enables the use of a large-screen display. For example, as part of the transformable structure, the electronic device may have a structure (e.g., a foldable structure) that is capable of changing the display area of the flexible display by supporting at least two housings which are rotatably coupled to each other. Such an electronic device may require an efficient arrangement structure of electronic components considering the coupling structure of housings that operate to be foldable relative to each other.

The above information may be provided as a related art for the purpose of helping understanding of the disclosure. No claim or determination is made as to whether any of the foregoing may be applied as prior art with respect to the disclosure.

Conventional devices are disclosed in WO 2023/173857 A1, US 2020/366770 A1, and CN 213 072 751 U.

### [Disclosure of Invention]

### [Technical Problem]

An electronic device (e.g., a portable communication device) may include a transformable foldable electronic device in which thee display area is expandable. The foldable electronic device may be operated such that the first housing and the second housing is foldable relative to each other through a hinge module. For example, a foldable electronic device has improved portability in a fully folded state and is capable of providing a user with a large screen through a flexible display supported by two housings arranged side by side in a fully unfolded state.

However, the foldable electronic device including two housings may have limitations in usability because it is only transformable into a fully folded state, a fully unfolded state, or an intermediate state that allows free stopping between the fully folded state and the fully unfolded state.

### [Solution to Problem]

The present invention is set out in the appended set of claims.

Various embodiments of the disclosure may provide a multi-foldable electronic device that includes an electronic component arrangement structure capable of providing an extended user experience by providing various operating states.

Various embodiments may provide a multi-foldable electronic device that includes an electronic component arrangement structure capable of providing a large display area in the fully unfolded state and helping enhance portability in the fully folded state.

Various embodiments may provide a multi-foldable electronic device that includes an electronic component arrangement structure, where electronic components are arranged considering the optimal arrangement positions to help improve convenience of use.

However, the problems to be solved in the disclosure are not limited to the above-mentioned problems, and may be variously expanded without departing from the scope of the disclosure.

According to various embodiments, a portable communication device may include a foldable housing including a first housing, a second housing, and a third housing, a first hinge assembly disposed between the first housing and the second housing, a second hinge assembly disposed between the first housing and the third housing, a flexible display including a first display area supported by the first housing, a second display area supported by the second housing, and a third display area supported by the third housing, and a first front camera disposed in the third display area of the third housing. The flexible display may include a display driving circuit configured to drive the flexible display, and the display driving circuit may be configured to be disposed in the second display area of the second housing.

### [Advantageous Effects of Invention]

The multi-foldable electronic device (e.g., a portable communication device) according to exemplary embodiments of the disclosure operates in a manner in which three housings are folded and unfolded relative to each other, and the electronic components are arranged in positions that are convenient to use even in the fully folded state, which may help improve the usability of the device. In addition, the multi-foldable electronic device may provide an expanded user experience as the three housings are transformed into various shapes relative to each other. In addition, the multi-foldable electronic device may provide a large display area in the fully unfolded state and may help improve portability in the fully folded state because the three housings are transformed in an overlapping manner.

Various other effects identified directly or indirectly through the disclosure may be provided.

The effects that are capable of being obtained by the disclosure are not limited to those described above, and other effects not described above may be clearly understood by a person ordinarily skilled in the art to which the disclosure belongs based on the following description.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIG. 2A is a front perspective view of a multi-foldable electronic device according to various embodiments of the disclosure in a fully unfolded state.
FIG. 2B is a plan view of the multi-foldable electronic device according to various embodiments of the disclosure in the fully unfolded state.
FIG. 2C is a rear perspective view of the multi-foldable electronic device according to various embodiments of the disclosure in the fully unfolded state.
FIG. 3A is a front perspective view of a multi-foldable electronic device according to various embodiments of the disclosure in a fully folded state.
FIGS. 3B and 3C are perspective views illustrating the multi-foldable electronic device according to various embodiments of the disclosure, in which the rear surface of the multi-foldable electronic device is shown in various directions in the fully folded state.
FIGS. 4A to 4C are views illustrating the operating state of a multi-foldable electronic device according to various embodiments of the disclosure.
FIG. 4D is a cross-sectional view of the multi-foldable electronic device according to various embodiments of the disclosure, taken along line 4d-4d in FIG. 4C.
FIGS. 5A to 5E are exemplary views illustrating various use states of a multi-foldable electronic device according to various embodiments of the disclosure.
FIGS. 6A to 6E are rear exploded perspective views of a multi-foldable electronic device according to various embodiments of the disclosure.
FIG. 6F is a front exploded perspective view of the multi-foldable electronic device according to various embodiments of the disclosure.
FIG. 7A is a front view of a multi-foldable electronic device according to various embodiments of the disclosure in the fully unfolded state, with the flexible display omitted.
FIG. 7B is a rear view of the multi-foldable electronic device according to various embodiments of the disclosure in the fully unfolded state, with rear surface covers omitted.
FIG. 7C is a view illustrating the configuration of the electronic device of FIG. 7A according to various embodiments of the disclosure, with the housings omitted.
FIG. 7D is a view illustrating the configuration of the electronic device of FIG. 7B according to various embodiments of the disclosure, with the housings omitted.
FIG. 8 is a view illustrating an electrical connection structure between boards in a multi-foldable electronic device according to various embodiments of the disclosure.
FIG. 9A is a plan view illustrating a multi-foldable electronic device in the fully unfolded state in which the arrangement of an extension panel portion of a flexible display according to various embodiments of the disclosure is schematically illustrated.
FIG. 9B is a view illustrating the configuration of a flexible display according to various embodiments of the disclosure.
FIG. 9C is a cross-sectional view of the electronic device according to various embodiments of the disclosure taken along line 9c-9c in FIG. 9A.
FIG. 9D is an enlarged view of area 9d of FIG. 9C according to various embodiments of the disclosure.
FIG. 10A is a rear view of a multi-foldable electronic device in a fully unfolded state in which the arrangement of an extension panel portion of a sub-display according to various embodiments of the disclosure is schematically illustrated.
FIG. 10B is a view illustrating the configuration of a sub-display according to various embodiments of the disclosure.
FIG. 10C is a view comparing the arrangements of sub-displays for respective housings according to various embodiments of the disclosure.
FIG. 11 is a plan view of a multi-foldable electronic device in a fully unfolded state showing an arrangement structure of speakers according to various embodiments of the disclosure.
FIG. 12 is a configuration diagram of a multi-foldable electronic device illustrating an antenna arrangement structure according to various embodiments of the disclosure.

### [Mode for the Invention]

Hereinafter, embodiments of the disclosure will be described in detail with reference to the accompanying drawings so that those ordinarily skilled in the art to which the disclosure pertains can easily practice them. However, the disclosure may be implemented in many different forms without being limited to those embodiments described herein. In relation to the description of the drawings, identical or similar reference symbols may be used for the same or similar components. Additionally, in the drawings and related descriptions, descriptions of well-known functions and configurations may be omitted for clarity and brevity.

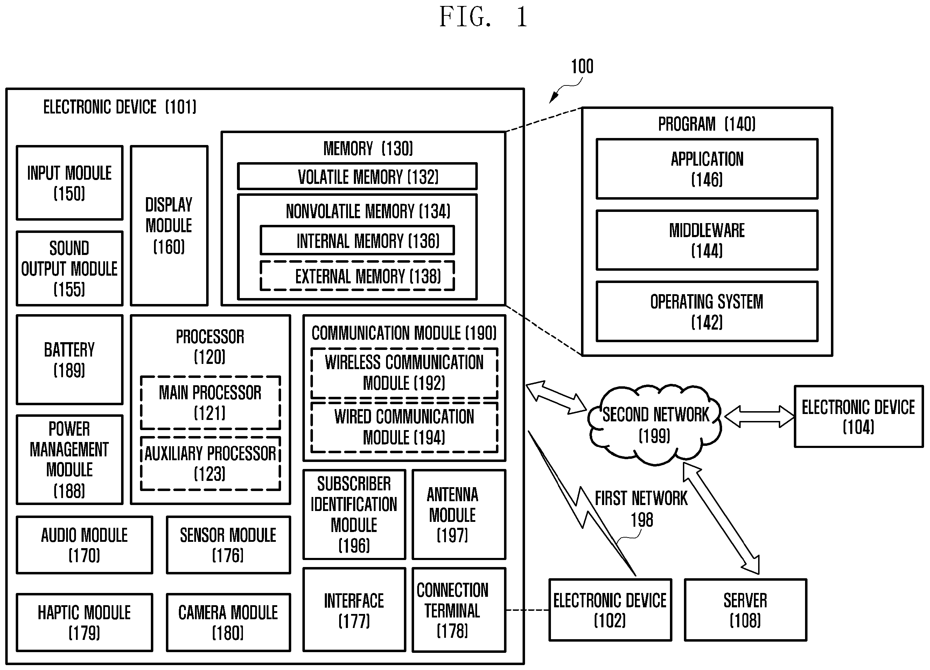

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include at least one of a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, an antenna module 197, or a drive control module 181. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include at least one of internal memory 136 or external memory 138.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or loT-related technology.

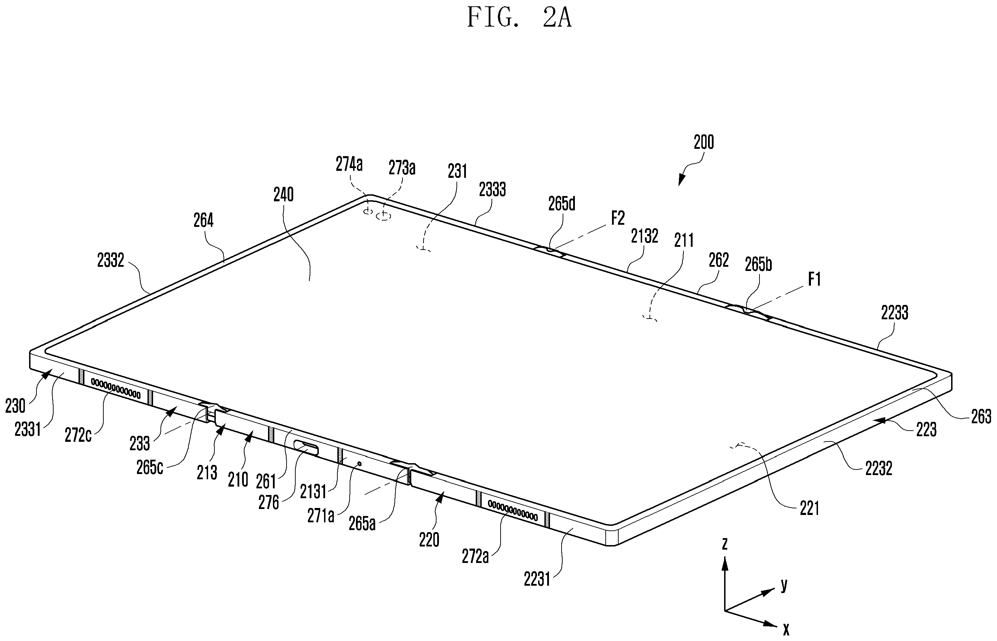

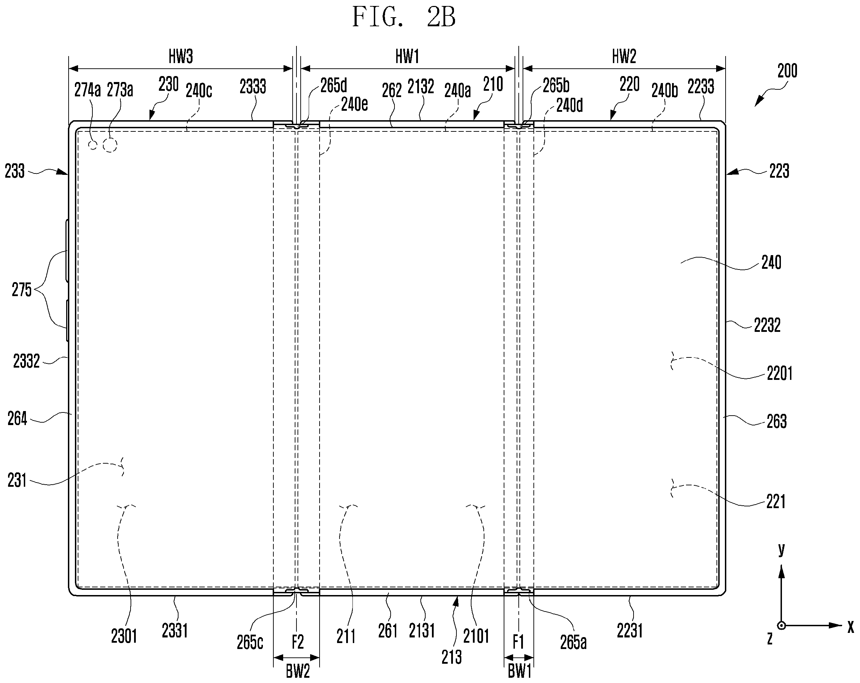

The electronic device 200 of FIGS. 2A and 2B may further include embodiments that are at least partially similar to or different from the electronic device 101 of FIG. 1.

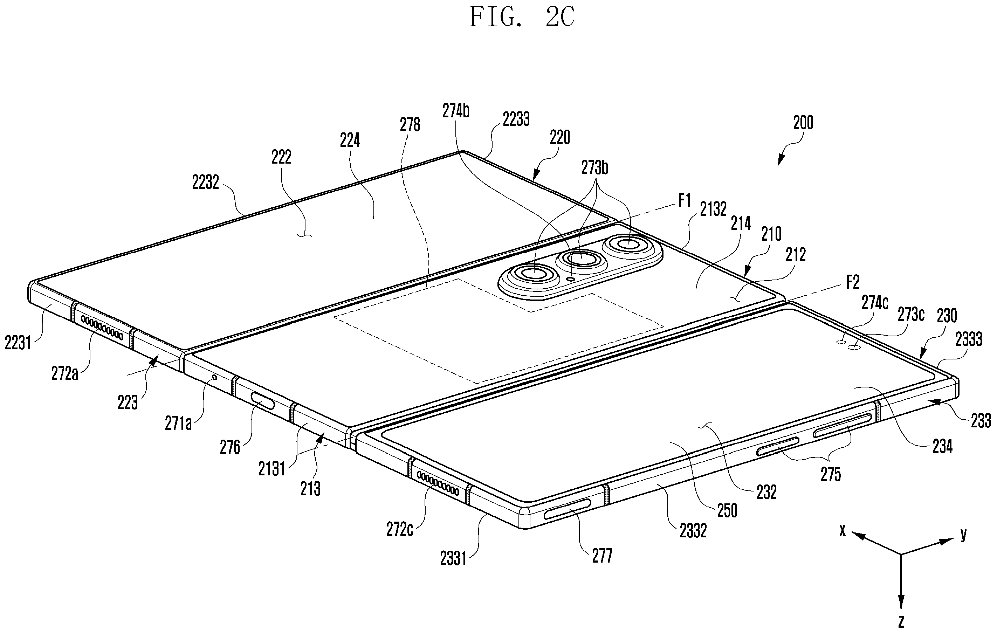

FIG. 2A is a front perspective view of a multi-foldable electronic device according to various embodiments of the disclosure in a fully unfolded state. FIG. 2B is a plan view of the multi-foldable electronic device according to various embodiments of the disclosure in the fully unfolded state. FIG. 2C is a rear perspective view of the multi-foldable electronic device according to various embodiments of the disclosure in the fully unfolded state.

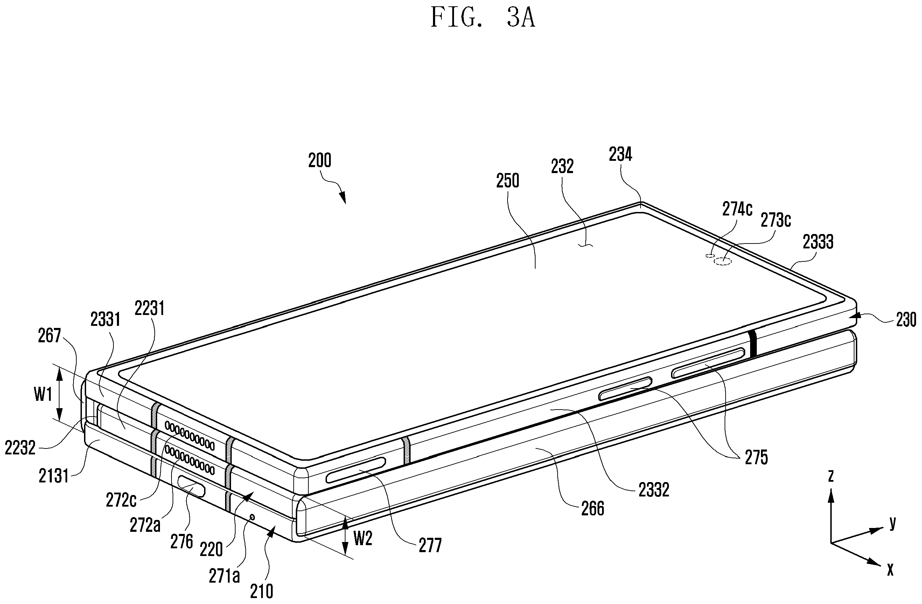

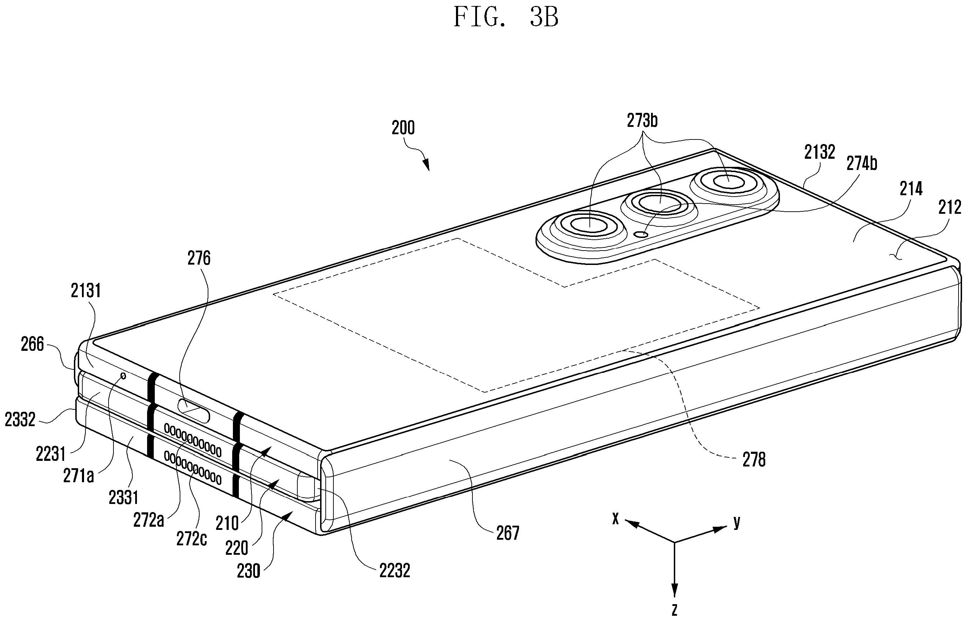

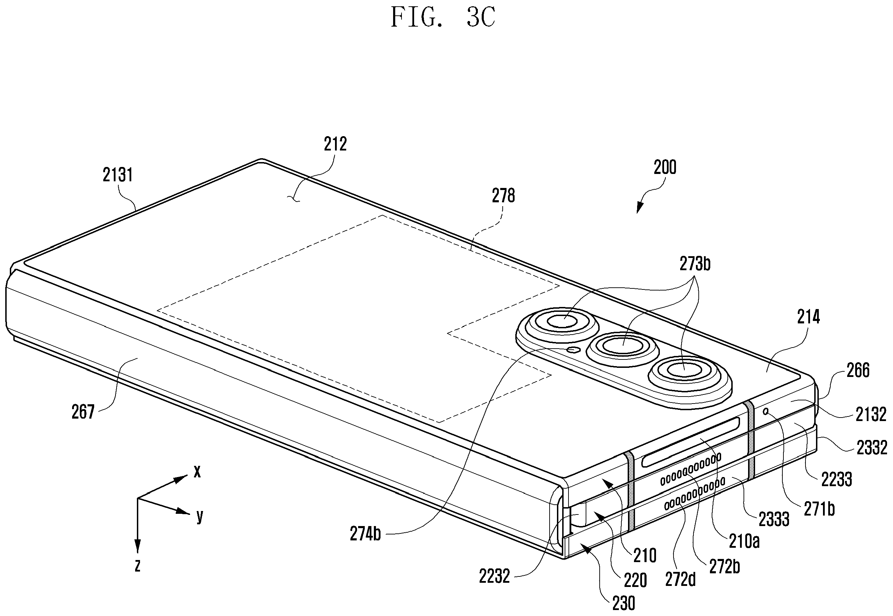

FIG. 3A is a front perspective view of the multi-foldable electronic device according to various embodiments of the disclosure in a fully folded state. FIGS. 3B and 3C are perspective views illustrating the multi-foldable electronic device according to various embodiments of the disclosure, in which the rear surface of the multi-foldable electronic device is shown in various directions in the fully folded state.

The multi-foldable electronic device 200 of FIGS. 2A to 3C may be at least partially similar to the electronic device 101 of FIG. 1 or may further include other embodiments of a multi-foldable electronic device.

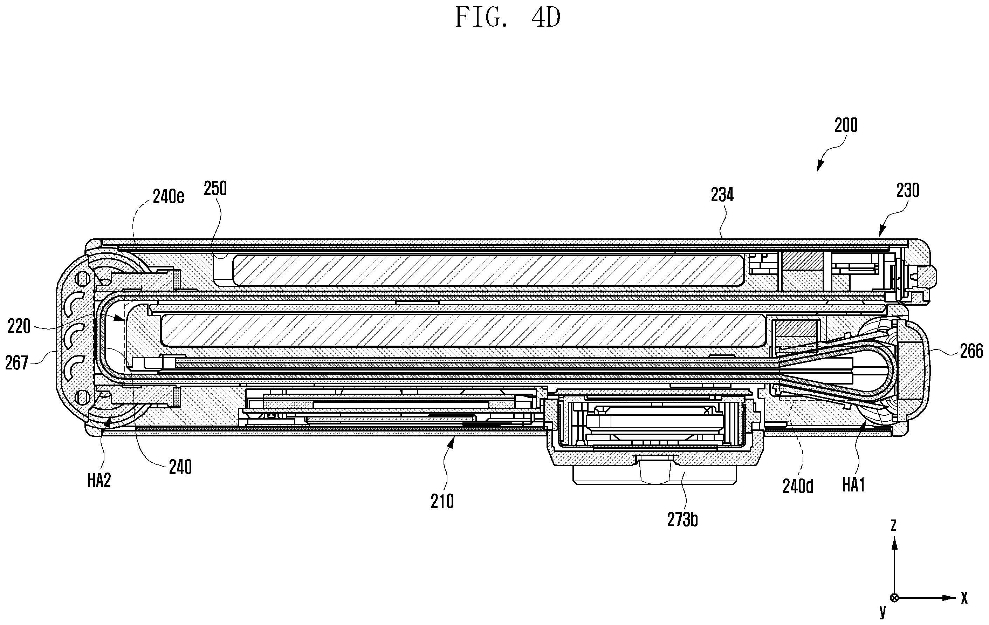

Referring to FIGS. 2A to 3C, the multi-foldable electronic device 200 (e.g., a portable communication device or electronic device) (e.g., the electronic device 101 of FIG. 1) may include a first housing 210 (e.g., a first housing part), a second housing 220 (e.g., a second housing part) connected to the first housing 210 at one side (e.g., the right side) direction of the first housing 210 (e.g., the x-axis direction) to be rotatable about a first folding axis F1 via a first hinge assembly (e.g., the first hinge assembly HA1 in FIG. 4D), and a third housing 230 (e.g., a third housing part) connected to the first housing 210 at the other side (e.g., the left side) direction of the first housing 210 (e.g., the -x-axis direction) to be rotatable about a second folding axis F2 via a second hinge assembly (e.g., the second hinge assembly HA2 in FIG. 4D). In an embodiment, the first hinge assembly HA1 may include a first hinge housing 266 that accommodates at least one first hinge module (e.g., a first hinge device or a first hinge structure) interconnecting the first housing 210 and the second housing 220, and the second hinge assembly HA2 may include a second hinge housing 267 that accommodates at least one second hinge module (e.g., a second hinge device or a second hinge structure) interconnecting the first housing 210 and the third housing 230. In an embodiment, the first hinge housing 266 may cover the first hinge module such that the first hinge module is invisible from the outside while the first housing 210 and the second housing 220 are in the fully folded state or are being folded. In an embodiment, the first hinge housing 266 may be arranged to be invisible from the outside when the first housing 210 and the second housing 220 are in the fully unfolded state. In an embodiment, the second hinge housing 267 may cover the second hinge module such that the second hinge module is invisible from the outside while the first housing 210 and the third housing 230 are in the fully folded state or are being folded. In an embodiment, the second hinge housing 267 may be arranged to be invisible from the outside when the first housing 210 and the third housing 230 are in the fully unfolded state. In an embodiment, the multi-foldable electronic device 200 may include a foldable housing (e.g., a multi-foldable housing) configured with the first housing 210, the second housing 220, the third housing 230, the first hinge housing 266, and the second hinge housing 267. In some embodiments, the multi-foldable electronic device 200 may include a foldable housing configured with the first housing 210, the second housing 220, and the third housing 230. In an embodiment, the multi-foldable electronic device 200 may include a flexible display 240 (e.g., a first display) disposed to be supported on the first housing 210, the second housing 220, and the third housing 230. In an embodiment, the multi-foldable electronic device 200 may include a sub-display 250 (e.g., a second display) disposed through the third housing 230. Herein, the surface on which the flexible display 240 is disposed may be defined as the front surface of the multi-foldable electronic device 200, and the surface opposite to the front surface may be defined as the rear surface of the multi-foldable electronic device 200. In an embodiment, the surface surrounding the space between the front surface and the rear surface may be defined as the side surface of the electronic device 200. Herein, the state in which the first housing 210, the second housing 220, and the third housing 230 of the multi-foldable electronic device 200 are fully unfolded may be defined as a "first state" or "fully unfolded state", the state in which the first housing 210, second housing 220, and third housing 230 are fully folded with respect to each other may be defined as a "second state" or a "fully folded state", and the state in which only the first housing 210 and the second housing 220 are folded relative to each other may be defined as a "third state" or an "intermediate state".

According to various embodiments, the first housing 210 may include a first surface 211, a second surface 212 facing away from the first surface 211, and a first side surface member 213 surrounding a first space 2101 between the first surface 211 and the second surface 212. In an embodiment, at least a portion of the first side surface member 213 may form at least a portion of the side surface of the multi-foldable electronic device 200. In an embodiment, the first side surface member 213 may include a first side surface 2131 and a second side surface 2132 disposed at a position opposite to the first side surface 2131. In an embodiment, the first housing 210 may include a first rear surface cover 214 coupled to the first side surface member 213. In an embodiment, the first space 2101 may be defined by a first rear surface cover 214 coupled to the first side surface member 213 on the second surface 212 of the first housing 210.

According to various embodiments, the second housing 220 may include a third surface 221, a fourth surface 222 facing away from the third surface 221, and a second side surface member 223 surrounding a second space 2201 between the third surface 221 and the fourth surface 222. In an embodiment, at least a portion of the second side surface member 223 may form at least a portion of the side surface of the multi-foldable electronic device 200. In an embodiment, the second side surface member 223 may include a third side surface 2231, a fourth side surface 2232 extending from the third side surface 2231 in a direction perpendicular to the same, and a fifth side surface 2233 extending from the fourth side surface 2232 and parallel to the third side surface 2231. In an embodiment, the second housing 220 may include a second rear surface cover 224 coupled to the second side surface member 223. In an embodiment, the second space 2201 may be defined by a second rear surface cover 224 coupled to the second side surface member 223 on the fourth surface 222.

According to various embodiments, the third housing 230 may include a fifth surface 231, a sixth surface 232 facing away from the fifth surface 231, and a third side surface member 233 surrounding a third space 2301 between the fifth surface 231 and the sixth surface 232. In an embodiment, at least a portion of the third side surface member 233 may form at least a portion of the side surface of the multi-foldable electronic device 200. In an embodiment, the third side surface member 233 may include a sixth side surface 2331, a seventh side surface 2332 extending from the sixth side surface 2331 in a direction perpendicular to the same, and an eighth side surface 2333 extending from the seventh side surface 2332 and parallel to the sixth side surface 2331. In an embodiment, the third space 2301 may be defined by a third rear surface cover 234 coupled to the third side surface member 233 on the sixth surface 2331.

According to various embodiments, the first side surface 2131, the third side surface 2231, and the sixth side surface 2331 may form the same side surface (e.g., the lower side surface) of the multi-foldable electronic device 200. In an embodiment, the second side surface 2132, the fifth side surface 2233, and the eighth side surface 2333 may form the same side surface (e.g., the upper side surface) of the multi-foldable electronic device 200. In an embodiment, the fourth side surface 2231 may form one side surface (e.g., the right side surface) of the multi-foldable electronic device 200. In an embodiment, the seventh side surface 2332 may form one side surface (e.g., the left side surface) of the multi-foldable electronic device 200.

According to various embodiments, the multi-foldable electronic device 200 may be configured such that, in the fully unfolded state (e.g., the first state), the first housing 210, the second housing 220, and the third housing 230 are positioned side by side so that the first surface 211, the third surface 221, and the fifth surface 231 are oriented in the same direction. In an embodiment, the multi-foldable electronic device 200 may be configured such that, in the fully folded state (e.g., the second state), the first housing 210, the second housing 220, and the third housing 230 are positioned to be sequentially stacked so that the first surface 211 and the third surface 221 face each other, and the fourth surface 222 and the fifth surface 231 face each other. In this case, the second surface 212 and the sixth surface 232 may be positioned to be visible from the outside, and the third surface 221 and the fourth surface 222 may be positioned to be invisible through the first housing 210 and the third housing 230. In an embodiment, the sub-display 250 may be disposed to be visible from the outside through at least a portion of the sixth surface 232 in the unfolded and/or folded state.

According to various embodiments, the first housing 210, the second housing 220, and the third housing 230 may have different sizes. In an embodiment, the first housing 210 may have a first width HW1, the second housing 220 may have a second width HW2 that is smaller than the first width HW1, and the third housing 230 may have a third width HW3 that is larger than the first width HW1. For example, through definition of the widths HW1, HW2, and HW3 of the housings 210, 220, and 230, the multi-foldable electronic device 200 may be configured such that none of the housings protrude outward in the fully folded state, thereby helping to provide an aesthetic appearance and improve portability. However, the disclosure is not limited to this, and at least two of the first, second, and third widths HW1, HW2, and HW3 may be configured to be equal to each other.

According to various embodiments, the flexible display 240 may include a first area 240a (e.g., a first display area) corresponding to at least a portion of the first housing 210, a second area 240b (e.g., a second display area) extending from one side (e.g., the right side) of the first area 240a and corresponding to at least a portion of the second housing 220, and a third area 240c (e.g., a third display area) extending from the other side (e.g., the left side) of the first area 240a and corresponding to at least a portion of the third housing 230. In an embodiment, the flexible display 240 may include a bendable fourth area 240d (e.g., a first folding area) including a portion of the first area 240a and a portion of the second area 240b and corresponding to the first hinge assembly HA1, and a bendable fifth area 240e (e.g., a second folding area) including a portion of the first area 240a and a portion of the third area 240c and corresponding to the second hinge assembly HA2. In an embodiment, the area division of the flexible display 240 is only an exemplary division by the three housings 210, 220, and 230 and the two hinge assemblies HA1 and HA2, and the flexible display 240 may be displayed as a substantially seamless single entire screen. In an embodiment, the first area 240a and the second area 240b may have an overall symmetric shape or a partially asymmetric shape with respect to the fourth area 240d and/or the first folding axis F1. In an embodiment, the first area 240a and the third area 240c may have an overall symmetric shape or a partially asymmetric shape with respect to the fifth area 240e and/or the second folding axis F2. In an embodiment, in a direction perpendicular to the first folding axis F1 (e.g., the x-axis direction), a first folding width BW1 of the fourth area 240d may be smaller than a second folding width BW1 of the fifth area 240e. In some embodiments, the area of the fourth area 240d may be smaller than the area of the fifth area 240e. This may be due to the fact that the first hinge assembly HA1 interconnecting the first housing 210 and the second housing 220 and the second hinge assembly HA2 interconnecting the first housing 210 and the third housing 230 differ from each other. For example, the size of at least one first hinge module (e.g., a narrow hinge module) of the first hinge assembly HA1 interconnecting the first housing 210 and the second housing 220 may be smaller than the size of at least one second hinge module (e.g., a wide hinge module) of the second hinge assembly HA2 interconnecting the first housing 210 and the third housing 230 and folding the flexible display 240 in the fully folded state. With this configuration, the second hinge housing 267 may have a first accommodation width W1 larger than the thickness of the first housing 210, and the first hinge housing 266 may have a second accommodation width W2 smaller than the first accommodation width W1.

According to various embodiments, the electronic device 200 may include a first rear surface cover 214 disposed on the second surface 212 of the first housing 210, a second rear surface cover 224 disposed on the fourth surface 222 of the second housing 220, and a third rear surface cover 234 disposed on the sixth surface 232 of the third housing 230. In some embodiments, at least a portion of the first rear surface cover 214 may be formed integrally with the first side surface member 213. In some embodiments, at least a portion of the second rear surface cover 224 may be formed integrally with the second side surface member 223. In some embodiments, at least a portion of the third rear surface cover 234 may be formed integrally with the third side surface member 233. In an embodiment, at least one of the first rear surface cover 214, the second rear surface cover 224, and the third rear surface cover 234 may be made of a substantially transparent plate (e.g., a glass plate including various coating layers, or a polymer plate) or an opaque plate. In an embodiment, the first rear surface cover 214 and the second rear surface cover 224 may be made of, for example, coated or colored glass, ceramic, polymer, metal (e.g., aluminum, stainless steel (STS), or magnesium), or an opaque plate such as a combination of two or more of these materials. In an embodiment, the third rear surface cover 234 may be made of a substantially transparent plate of, for example, glass or polymer. Accordingly, the sub-display 250 (e.g., a fourth display area) may be disposed in the third space 2301 of the third housing 230 to be visible from the outside through the third rear surface cover 234.

According to various embodiments, the multi-foldable electronic device 200 may include a first protection frame 261 (e.g., a first decoration member) and a second protection frame 262 (e.g., a second decoration member) disposed in the first housing 210 to cover an edge of the first area 240a of the flexible display 240. In an embodiment, the first protection frame 261 may be disposed along the first side surface 2131 and the second protection frame 262 may be disposed along the second side surface 2132, in the first housing 210. In an embodiment, the edge of the flexible display 240 corresponding to the first housing 210 may be concealed by the first and second protection frames 261 and 262 to be invisible from the outside. In an embodiment, the multi-foldable electronic device 200 may include a third protection frame 263 (e.g., a third decorative member) disposed in the second housing 220 to cover the edge of the second area 240b of the flexible display 240. In an embodiment, the third protection frame 263 may be disposed along the third side surface 2231, the fourth side surface 2232, and the fifth side surface 2233 in the second housing 220. In an embodiment, the edge of the flexible display 240 corresponding to the second housing 220 may be concealed by the third protection frame 263 to be invisible from the outside. In an embodiment, the multi-foldable electronic device 200 may include a fourth protection frame 264 (e.g., a fourth decorative member) disposed in the third housing 230 to cover the edge of the third area 240c of the flexible display 240. In an embodiment, the fourth protection frame 264 may be disposed along the sixth side surface 2331, the seventh side surface 2332, and the eighth side surface 2333 in the third housing 230. In an embodiment, the edge of the flexible display 240 corresponding to the third housing 230 may be concealed by the fourth protection frame 264 to be invisible from the outside. In some embodiments, at least one protection frame may be omitted among the first, second, third, and fourth protection frames 261, 262, 263, and 264.

According to various embodiments, the multi-foldable electronic device 200 may include, in the fourth area 240d, a first protection member 265a (e.g., a first protection cap) disposed between the first protection frame 261 and the third protection frame 263 and disposed to cover at least a portion of the edge of the flexible display 240, and a second protection member 265b disposed between the second protection frame 262 and the third protection frame 263 and disposed to cover at least a portion of the edge of the flexible display 240. In an embodiment, the multi-foldable electronic device 200 may include, in the fifth area 240e, a third protection member 265c (e.g., a third protection cap) disposed between the first protection frame 261 and the fourth protection frame 264 and disposed to cover at least a portion of the edge of the flexible display 240, and a fourth protection member 265d disposed between the second protection frame 262 and the fourth protection frame 264 and disposed to cover at least a portion of the edge of the flexible display 240. In an embodiment, at least one protection member may be omitted among the first, second, third, and fourth protection members 265a, 265b, 265c, and 265d.

According to various embodiments, the electronic device 200 may include at least one electronic component disposed in at least one of the first space 2101 of the first housing 210, the second space 2201 of the second housing 220, and/or the third space 2301 of the third housing 230. In an embodiment, the at least one electronic component may include a flexible display 240 (e.g., a first display) disposed through the first housing 210, the second housing 220, and the third housing 230, a sub-display 250 (e.g., a second display) disposed in the third housing 230, one or more microphones 271a and 271b (e.g., an input module or input device), one or more speakers 272a, 272b, 272c, and 272d (e.g., a sound output module or sound output device), one or more cameras 273a, 273b, and 273c (e.g., a camera module or camera device), one or more sensors 274a, 274b, and 274c (e.g., a sensor module), at least one key button 275 (e.g., an input device or physical key), a connector port 276, or a socket device 277. In some embodiments, the electronic device 200 may additionally include at least one other component. In some embodiments, at least one of the above-described components may be omitted.

According to various embodiments, the flexible display 240 may be disposed in an accommodation space defined by the housings 210, 220, and 230. For example, the flexible display 200 may be disposed in a recess defined by the housings 210, 220, and 230, and may be disposed to occupy substantially most of the front surface of the electronic device 200 in the fully unfolded state. In an embodiment, the sub-display 250 may be disposed in the third space 2301 of the third housing 230 to be visible from the outside through the third rear surface cover 234.

In various embodiments, the one or more microphones 271a and 271b may include a first microphone 271a disposed through the first side surface 2131 of the first housing 210 and a second microphone 271b disposed through the second side surface 2132 of the first housing 210. In some embodiments, the one or more microphones 271a and 271b may be disposed on the third side surface 2231 and/or the fifth side surface 2233 of the second housing 220. In some embodiments, the one or more microphones 271a and 271b may be disposed on the sixth side surface 2331 and/or the eighth side surface 2333 of the third housing 230.

In various embodiments, the one or more speakers 272a, 272b, 272c, and 272d may include a first speaker 272a disposed to emit sound through the third side surface 2231 of the second housing 220, a second speaker 272b disposed to emit sound through the fifth side surface 2233, a third speaker 272c disposed to emit sound through the sixth side surface 2331 of the third housing 230, and a fourth speaker 272d disposed to emit sound through the eighth side surface 2333. In an embodiment, the one or more speakers 272a, 272b, 272c, and 272d may be arranged symmetrically to implement stereo sound (e.g., three-dimensional sound) in the unfolded or folded state of the multi-foldable electronic device 200. In an embodiment, in the fully folded state, the second speaker 272b or the fourth speaker 272d may be placed near the user's ear and may be used as a call receiver. In some embodiments, the multi-foldable electronic device 200 may further include an additional receiver (not illustrated) disposed in the third space 2301 of the third housing 230 and disposed to emit sound through a speaker hole provided in at least a portion of the third rear surface cover 234 or between the third rear surface cover 234 and the third side surface member 233. In some embodiments, the one or more speakers 272a, 272b, 272c, and 272d may be replaced with a piezo speaker that operates without a hole formed in the second housing 220 and/or the third housing 230.

According to various embodiments, the one or more camera 273a, 273b, and 273c may include a first camera 273a (e.g., a first front camera) disposed in the third space 2301 of the third housing 230 through the fifth surface 231 of the third housing 230, a second camera 273b disposed through the second surface 212 of the first housing 210, and a third camera 273c disposed through the sixth surface 232 of the third housing 230. In an embodiment, the least one camera 273a, 273b, and 273c may include one or more lenses, an image sensor, and/or an image signal processor. In some embodiments, the least one cameras 273a, 273b, and 273c may include two or more lenses (e.g., wide-angle and telephoto lenses) and image sensors, and may be disposed together on one surface of one of the first housing 210, the second housing 220, or the third housings 230. In some embodiments, the multi-foldable electronic device 200 may include a flash (not illustrated) disposed near the second camera 273b. In an embodiment, the flash may include, for example, a light-emitting diode or a xenon lamp.

According to various embodiments, the one or more sensors 274a, 274b, and 274c may generate electrical signals or data values corresponding to the internal operating state or the external environmental state of the multi-foldable electronic device 200. In an embodiment, the one or more sensors 274a, 274b, and 274c may include a first sensor 274a disposed on the fifth surface 231 of the third housing 210, a second sensor 274b disposed on the second surface 212 of the first housing 210, and/or a third sensor 226 disposed on the sixth surface 232 of the third housing 230. In some embodiments, the one or more sensors 274a, 274b, and 274c may include at least one of a gesture sensor, a grip sensor, a color sensor, an infrared (IR) sensor, an illumination sensor, an ultrasonic sensor, an iris recognition sensor, and a distance detection sensor (e.g., a time-of-flight (TOF) sensor or a light detection and ranging (LiDAR) sensor). In an embodiment, the multi-foldable electronic device 200 may further include, for example, at least one of an air pressure sensor, a magnetic sensor, a biometric sensor, a temperature sensor, a humidity sensor, or a fingerprint recognition sensor, as at least one sensor (not illustrated). In some embodiments, the fingerprint sensor may be positioned to detect a user's fingerprint through at least a portion of the key button 275.

According to various embodiments, the one or more cameras 273a, 273b, and 273c and/or the one or more sensors 274a, 274b, and 274c may be disposed to detect the external environment through the flexible display 240 and/or sub-display 250. For example, the one or more cameras 273a, 273b, and 273c and/or the one or more sensors 274a, 274b, and 274c may be disposed in the first space 2101 of the first housing 230 and/or the third space 2301 of the third housing 210 below the non-active display area or active display area of the flexible display 240 and/or sub-display 250, and may be disposed to come into contact with the external environment through a transparent area or an opening perforated to a cover member (e.g., a window layer) and/or the third rear surface cover 234. In an embodiment, the area corresponding to the one or more cameras 273a and 273c of the flexible display 240 and/or the sub-display 250 may be formed as a transmission area with a certain transmittance as a portion of a content display area. In an embodiment, the transmission area may have a transmittance ranging from about 5% to about 30%, preferably, 10% to 20%, and further preferably, 15%. The transmission area may include an area overlapping the effective area (e.g., a view angle area) of the one or more cameras 273a and 273c through which light for forming an image by an image sensor passes. For example, the transmission area of the flexible display 240 and/or the sub-display 250 may include an area where pixel placement density is lower than that of the surrounding area. For example, the transmission area may be replaced with an opening. For example, the one or more cameras 273a and 273c may include an under-display camera (UDC) or an under-panel camera (UPC). In an embodiment, some cameras 273a and 273c or some sensors 274a and 274c may be disposed to perform their functions without being visually exposed through the flexible display 240 and/or sub-display 250. For example, the area of the flexible display 240 and/or the sub-display 250 corresponding to the one or more cameras 273a and 273c and/or the one or more sensors 274a and 274c may not require a perforated opening.

According to various embodiments, at least one key button 275 may be disposed on the seventh side surface 2332 of the third housing 230. According to this, when the multi-foldable electronic device 200 is in a fully folded state, the sixth surface 232 faces upward to use the sub-display 250, and at least one key button 275 is located on the right side surface, which may help improve convenience of use. In some embodiments, the multi-foldable electronic device 200 may not include some or all of the one or more key buttons 275, and the key buttons not included in the multi-foldable electronic device may be implemented in other forms such as soft keys displayed on the flexible display 240 and/or the sub-display 250. In some embodiments, some of the one or more key buttons 275 may be implemented using one more pressure sensors implemented through the flexible display 240 and/or the sub-display 250. In some embodiments, the one or more key buttons 275 may be disposed on at least one of the first side surface 2131 or the second side surface 2132 of the first housing, the third side surface 2231 or the fifth side surface 2233 of the second housing 220, and/or the sixth side surface 2331 or the eighth side surface 2333 of the third housing 230, which can be used even when the multi-foldable electronic device 200 is in the fully folded state and/or the fully unfolded state.

According to various embodiments, the connector port 276 may be disposed through the first side surface 2131 of the first housing 210. In an embodiment, the connector ports 276 may include a connector (e.g., a USB connector or an interface connector port module (IF module)) structure configured to transmit/receive power and/or data to/from an external electronic device. In some embodiments, the connector port 276 may perform a function for transmitting/receiving an audio signal to and from the external electronic device, or may further include a separate connector port (e.g., an ear jack hole) for an audio signal transmitting/receiving function. In some embodiments, the connector port 276 may be disposed on at least one of the second side surface 2132 of the first housing, the third side surface 2231, the fourth side surface 2232, or the fifth side surface 2233 of the second housing 220, and/or the sixth side surface 2331, the seventh side surface 2332, or the eighth side surface 2333 of the third housing 230, which can be used even when the multi-foldable electronic device 200 is in the fully folded state and/or the fully unfolded state.

According to various embodiments, the socket device 277 may be disposed on the seventh side surface 2332 of the third housing 230 such that the multi-foldable electronic device 200 can be used even in the fully folded state. In an embodiment, the socket device 277 may include a tray coupled to be retractable from the seventh side surface 2332 to accommodate a SIM card or external memory card.

According to various embodiments, at least one of the one or more microphones 271a and 271b, the one or more speakers 272a, 272b, 272c, and 272d, the one or more key buttons 275, the connector port 276, or the socket device 277 may be exposed to the external environment through at least one hole (e.g., a through hole) formed in the first housing 210, the second housing 220, and/or the third housing 230.

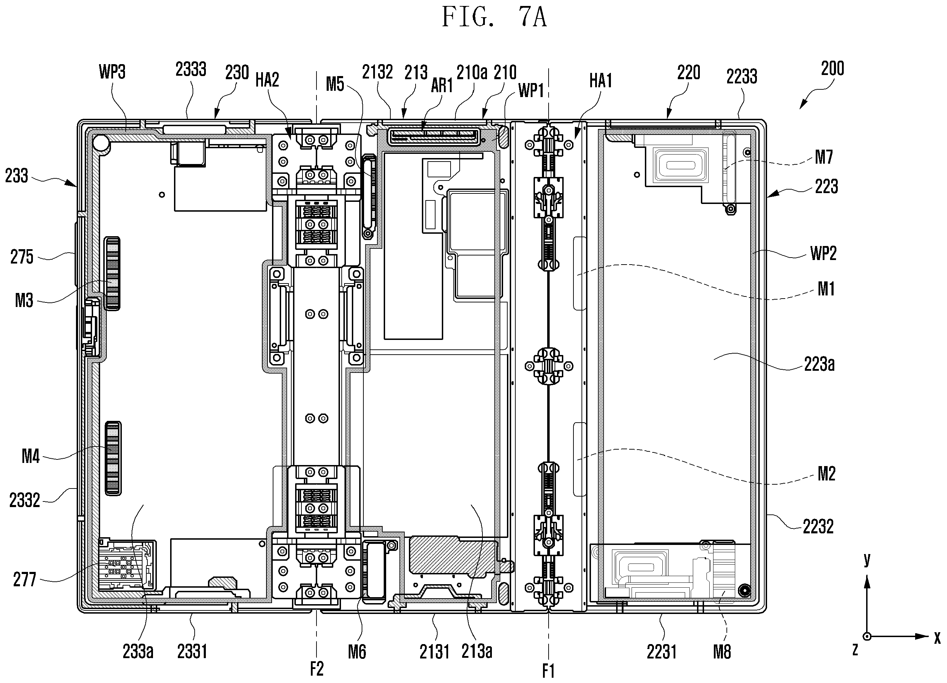

According to various embodiments, the multi-foldable electronic device 200 may include an antenna member 278 disposed in the first space 2101 of the first housing 210. In an embodiment, the antenna member 278 may be disposed to transmit or receive RF signals through the second surface 212 of the first housing 210 such that the multi-foldable electronic device 200 is operable even in the fully folded state. In an embodiment, the antenna member 278 may include an antenna operating in near-field communication (NFC), multi-function coil or multi-function core (MFC), and/or magnetic secure transmission (MST) modes to perform wireless charging, electronic payment, and/or data transmission/reception functions. In an embodiment, the antenna member 278 may include an ultra-wide band (UWB) antenna used to detect the distance to or the location of an external electronic device (e.g., an angle-of-arrival (AoA) positioning technique). In an embodiment, the multi-foldable electronic device 200 may include an antenna structure (e.g., the first antenna structure AR1 in FIG. 7A) disposed to form a beam pattern in the direction where the second side 2132 is oriented (e.g., the y-axis direction in FIG. 3C) through the dielectric cover 210a disposed on the second side surface 2132 of the first housing 210.

Through the folding operation of the first housing 210, the second housing 220, and the third housing 230, the multi-foldable electronic device 200 according to exemplary embodiments of the disclosure may allow a large display area to be used in the fully unfolded state, and is transformed in the fully folded state in such a way that the three housings 210, 220, and 230 overlap each other, which may help improve portability. In addition, a plurality of electronic components may be disposed at appropriate positions that are advantageous for use in the fully unfolded state and/or the fully folded state of the multi-foldable electronic device 200, which may help improve convenience of use.

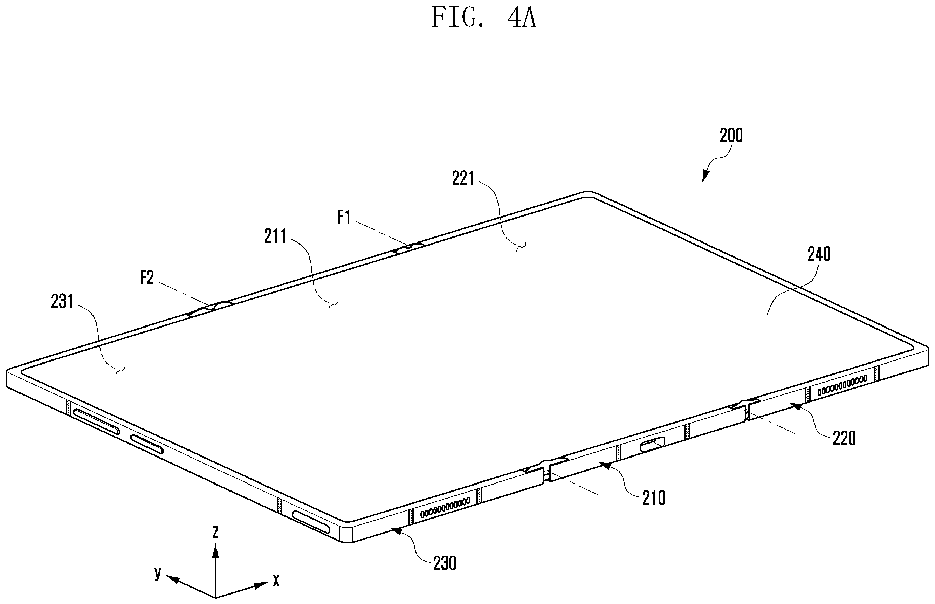

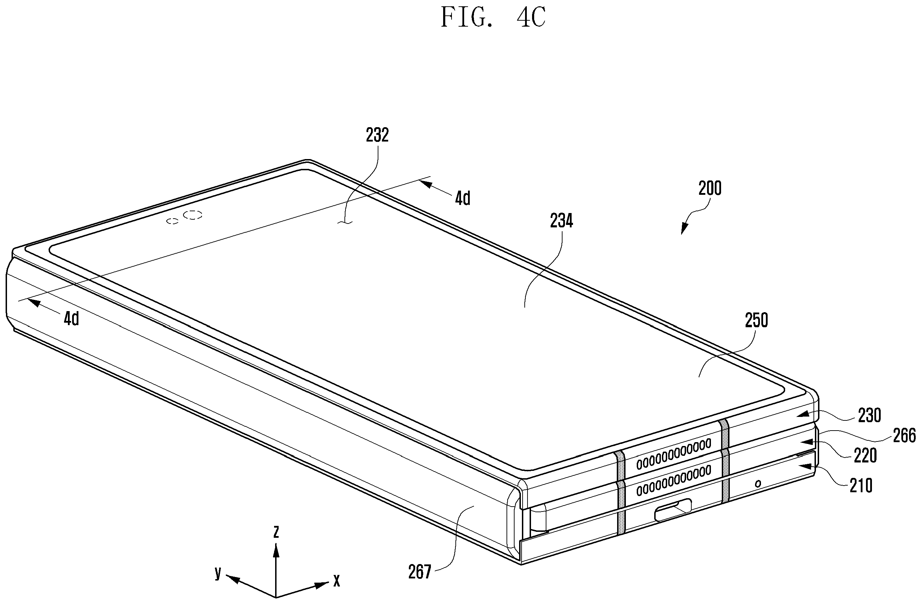

FIGS. 4A to 4C are views illustrating the operating state of a multi-foldable electronic device according to various embodiments of the disclosure. FIG. 4D is a cross-sectional view of the multi-foldable electronic device according to various embodiments of the disclosure, taken along line 4d-4d in FIG. 4C.

Referring to FIGS. 4A to 4D, the multi-foldable electronic device 200 may include a first housing 210, a second housing 220 connected to one side (e.g., right side) direction (e.g., the x-axis direction) of the first housing 210 to be rotatable about a first folding axis F1 with respect to the first housing 210 via a first hinge assembly HA1, and a third housing 230 connected to the other side (e.g., left side) direction (e.g., the -x-axis direction) of the first housing 210 to be rotatable about a second folding axis F2 with respect to the first housing 210 via a second hinge assembly HA2. In an embodiment, the multi-foldable electronic device 200 may include a flexible display 240 disposed to be supported by at least a portion of the first, second, and third housings 210, 220, and 230. In an embodiment, the multi-foldable electronic device 200 may include a sub-display 250 disposed on the third housing 230.

According to various embodiments, when the multi-foldable electronic device 200 is in the fully unfolded state (e.g., the state of FIG. 4A), the first surface 211 of the first housing 210, the third surface 221 of the second housing 220, and the fifth surface 231 of the third housing 230 may be oriented in the same direction (e.g., the z-axis direction in FIG. 4A), and the entire area of the flexible display 240 may be used.

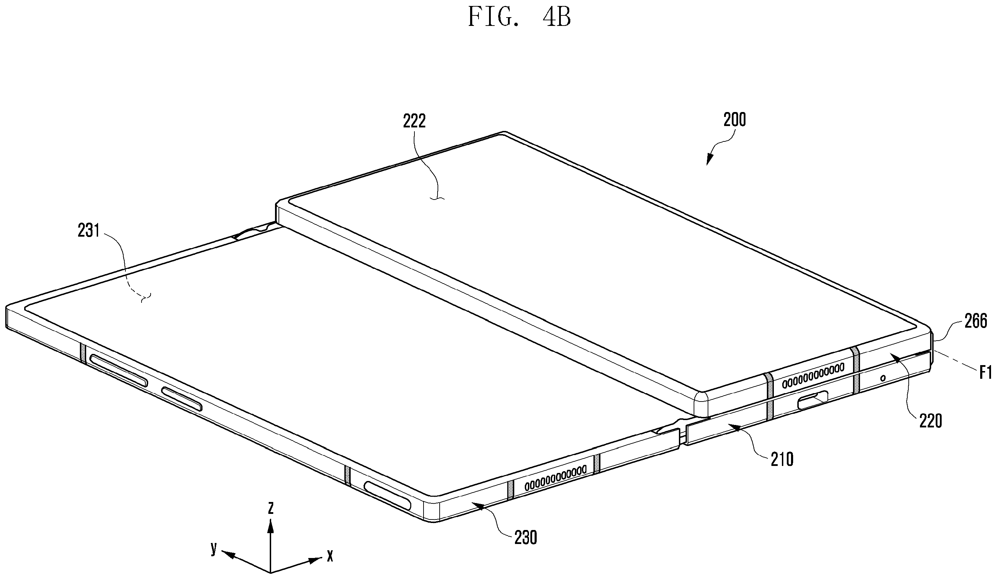

According to various embodiments, when the multi-foldable electronic device 200 is in an intermediate state (e.g., the state of FIG. 4B), the first housing 210 and the second housing 220 may be folded in an in-folding manner, so that the first surface 211 of the first housing 210 and the third surface 221 of the second housing 220 may face each other. In this case, the flexible display 240 may be exposed such that only the area corresponding to the third housing 230 is visible from the outside.

According to various embodiments, when switching from the intermediate state to the fully folded state (e.g., the state in FIGS. 4C and 4D), the multi-foldable electronic device 200 is folded in the in-folding manner such that the third housing 230 at least partially overlaps the second housing 220, so that the fourth surface 222 of the second housing 220 may face the fifth surface 231 of the third housing 230. In this case, the flexible display 240 is disposed between the first housing 210 and the second housing 220 and the second housing 220 and the third housing 230, so that the flexible display may be invisible from the outside. In an embodiment, when the multi-foldable electronic device 200 is in the fully folded state, the first housing 210, the second housing 220, and the third housing 230 are disposed to be sequentially stacked, which may help improve portability.

According to various embodiments, when the multi-foldable electronic device 200 is in the fully folded state, the second surface 212 of the first housing 210 and the sixth surface 232 of the third housing 230 may be disposed to be visible from the outside. Accordingly, the second camera 273b and/or the second sensor (e.g., the second sensor 274b in FIG. 2C) may be disposed through the second surface 212 of the first housing 210 to be used even in the fully folded state, and the sub-display 250 may also be disposed to be visible from the outside through the sixth surface 232 of the third housing 230.

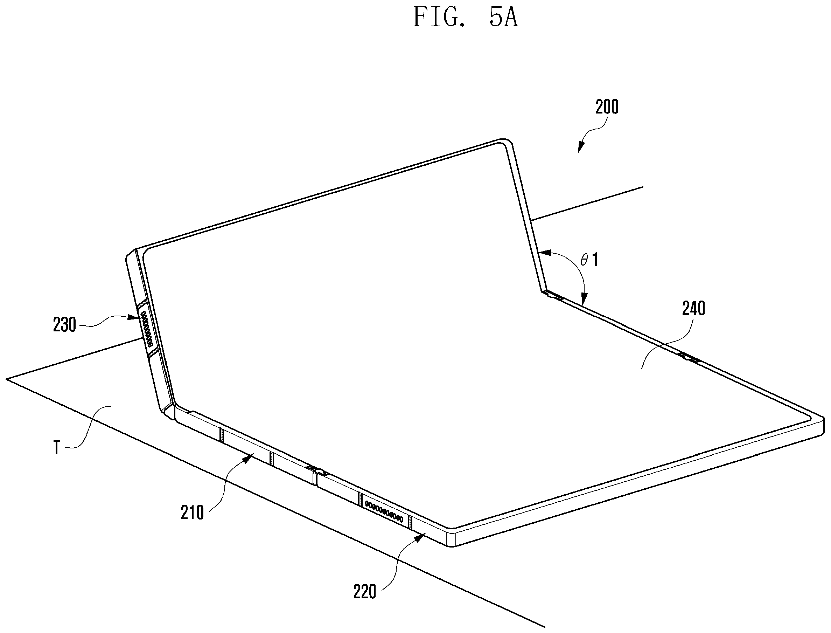

FIGS. 5A to 5E are exemplary views illustrating various use states of the multi-foldable electronic device according to various embodiments of the disclosure.

In addition to the fully unfolded state, the fully folded state, and/or the intermediate state, the multi-foldable electronic device 200 according to exemplary embodiments of the disclosure allows the housings 210, 220, and 230 to be maintained in a state of being rotated by a predetermined angle with respect to each other via the first and second hinge assemblies HA1 and HA2 (free stop function). Thus, the multi-foldable electronic device 200 may be transformed in various ways and provide a rich user experience.

Referring to FIG. 5A, the multi-foldable electronic device 200 may be maintained in the state in which the third housing 230 is rotated by a predetermined angle θ1 with respect to the first housing 210 from the fully unfolded state. In this case, the multi-foldable electronic device 200 may be used in the state in which with the first housing 210 and the second housing 220 are mounted on a mounting surface T.

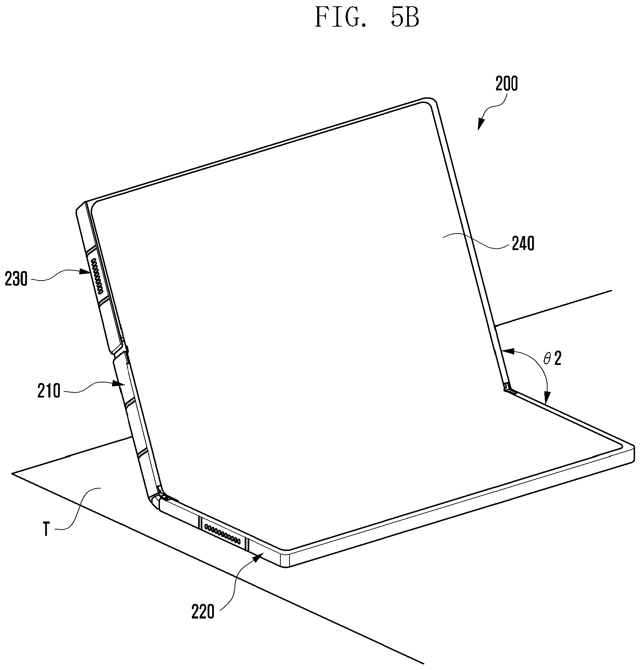

Referring to FIG. 5B, the multi-foldable electronic device 200 may be maintained in the state in which the second housing 220 is rotated by a predetermined angle θ2 with respect to the first housing 210 from the fully unfolded state. In this case, the multi-foldable electronic device 200 may be used in the state in which the second housing 220 is mounted on the mounting surface T.

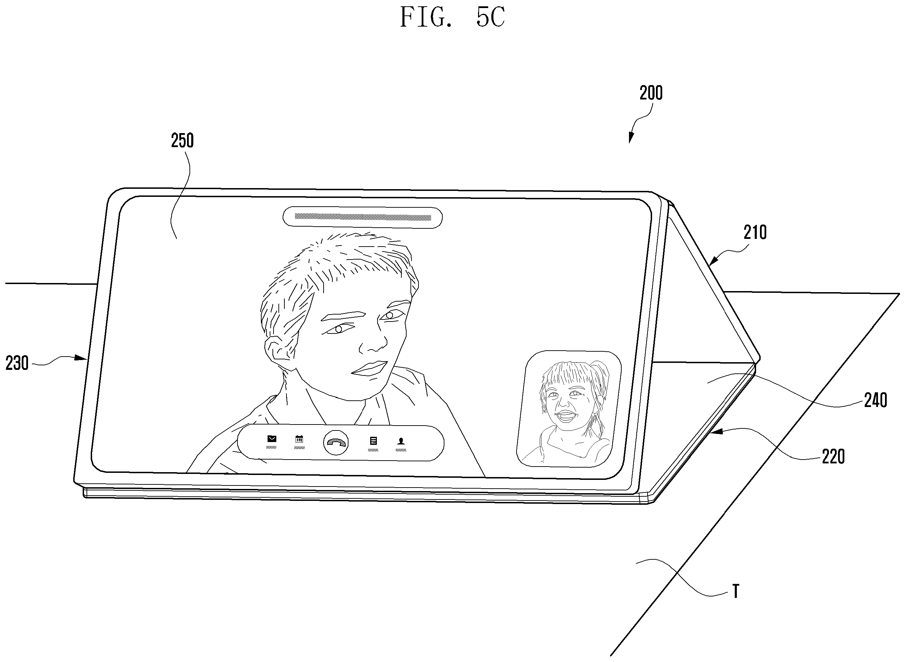

Referring to FIG. 5C, the multi-foldable electronic device 200 may be maintained in the state in which, from the fully unfolded state, the second housing 220 is rotated by a predetermined angle with respect to the first housing 210, and the third housing 230 is rotated by a predetermined angle with respect to the first housing 210. In an embodiment, the multi-foldable electronic device 200 may be used in the state in which one side of the second housing 220 (e.g., the fourth side surface 2232 in FIG. 2A) and one side of the third housing 230 (e.g., the seventh side surface 2332 in FIG. 2A) are brought into contact with each other so that the multi-foldable electronic device is transformed into a triangular prism shape, and the second housing 220 is mounted on the mounting surface T. In this case, the sub-display 250 exposed to the outside may be used. In some embodiments, the third housing 230 may be rotated in such that one side thereof is brought into contact with at least a partial area of the flexible display 230 corresponding to the second housing 220.

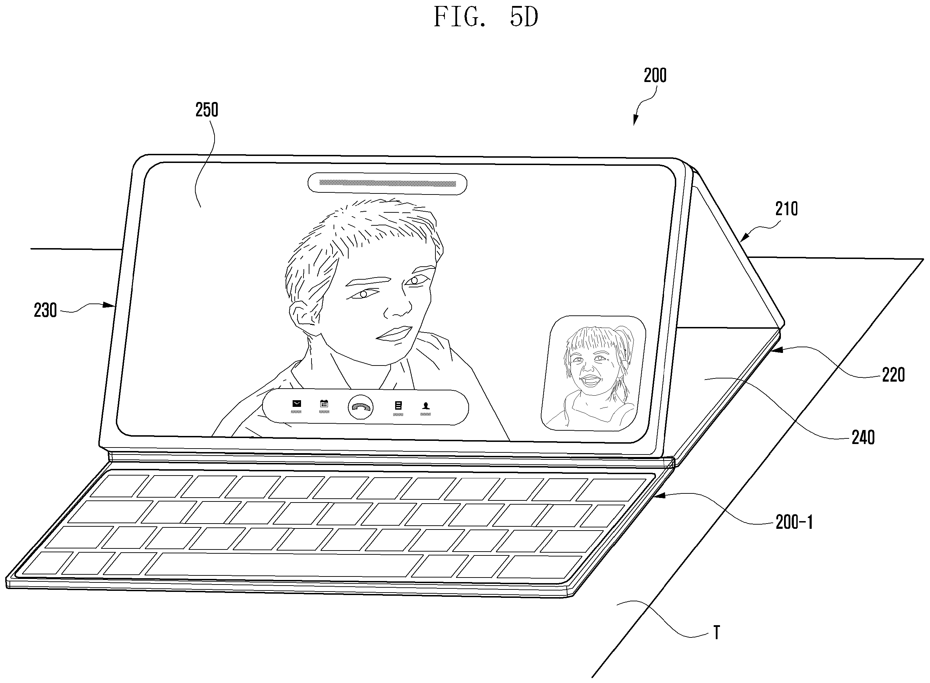

Referring to FIG. 5D, the multi-foldable electronic device 200 may be connected to an external electronic device 200-1 in the use state of FIG. 5C. In this case, the external electronic device 200-1 may include a key button device and/or a key pad device used as data input means. In an embodiment, the external electronic device 200-1 may be operatively connected to the multi-foldable electronic device 200 through wireless communication (e.g., Bluetooth communication).

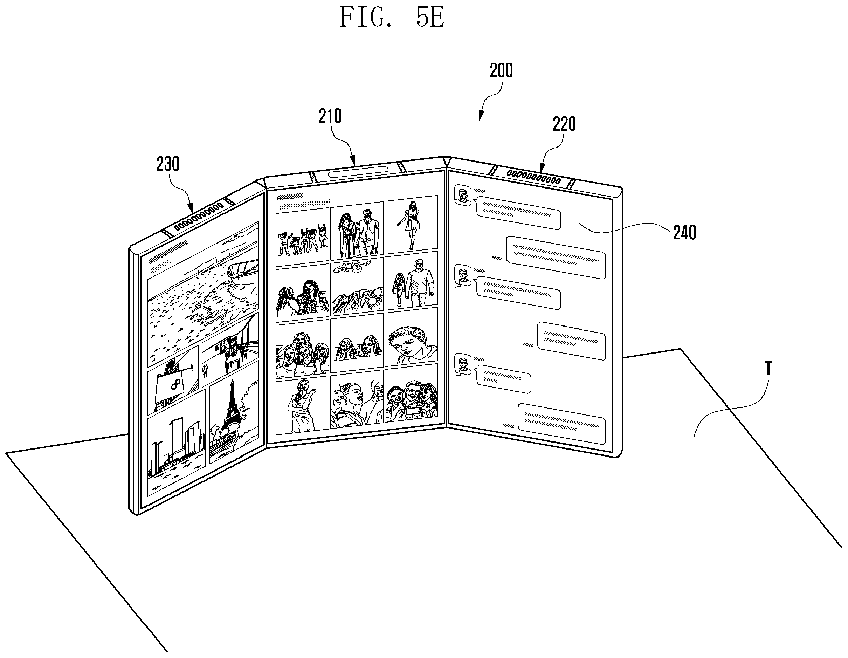

Referring to FIG. 5E, the multi-foldable electronic device 200 may be maintained in the state in which, from the fully unfolded state, the second housing 220 is rotated by a predetermined angle with respect to the first housing 210, and the third housing 230 is rotated by a predetermined angle with respect to the first housing 210. In an embodiment, in the transformed state, the multi-foldable electronic device 200 may be used in the state in which one side of the first housing 210 (e.g., the first side surface 2131 of FIG. 2A), one side of the second housing 220 (e.g., the third side surface 2231 in FIG. 2A), and one side of the third housing 230 (e.g., the sixth side surface 2331 in FIG. 2A) are mounted on the mounting surface T. Although not illustrated, in this case as well, the multi-foldable electronic device 200 be operatively connected to an external electronic device (e.g., the external electronic device 200-1 in FIG. 5D), thereby helping improve usability.

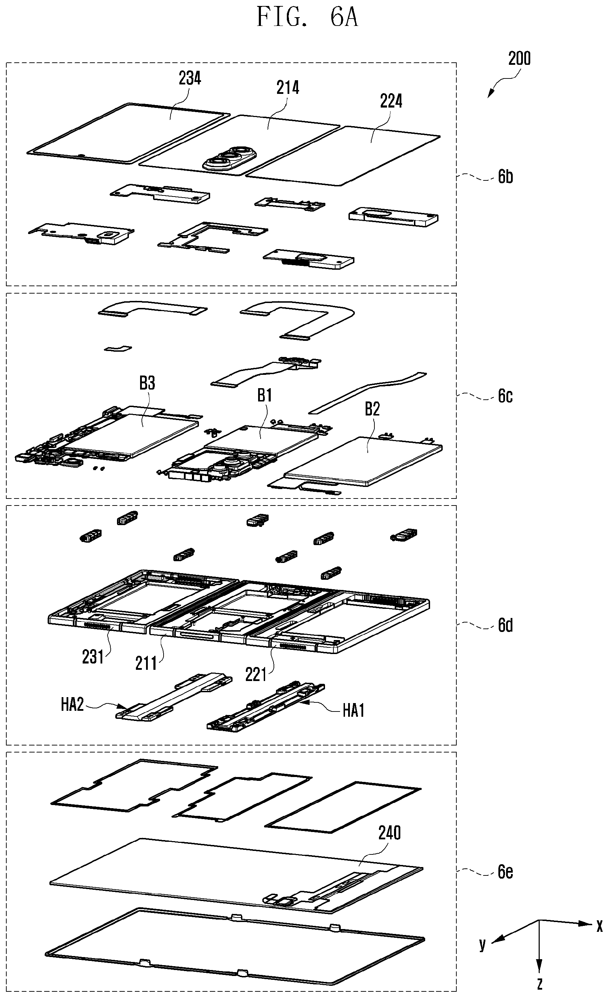

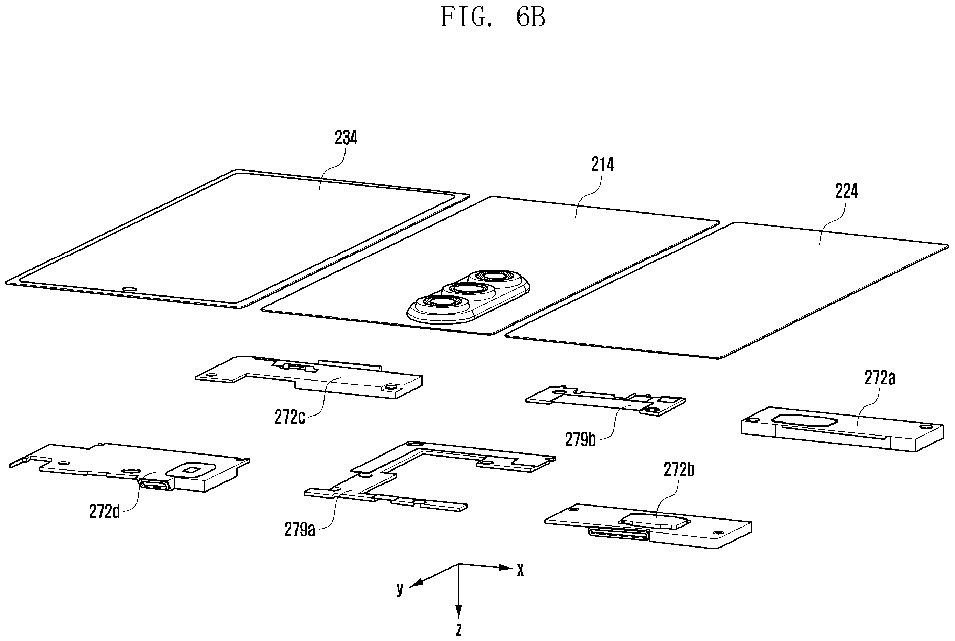

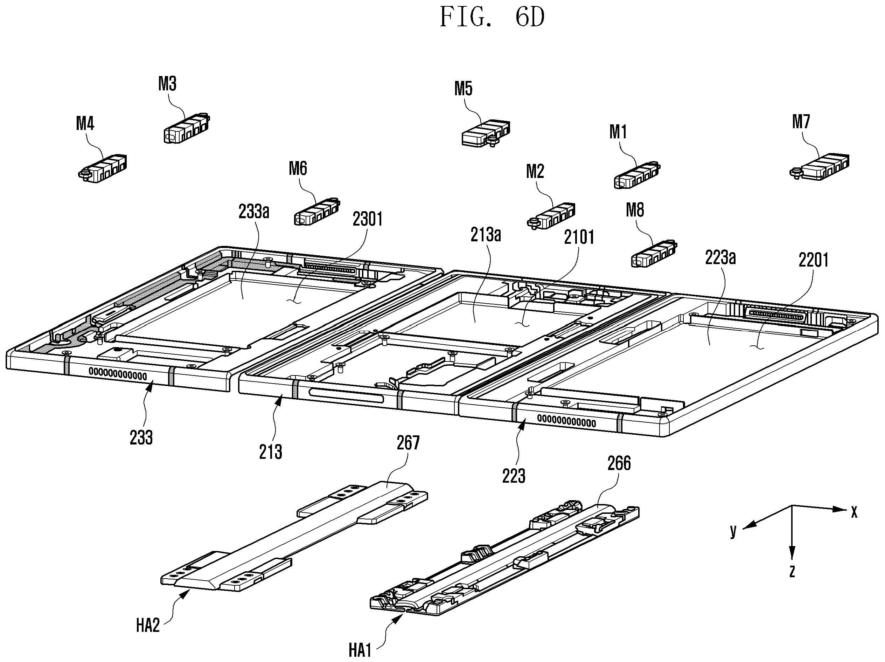

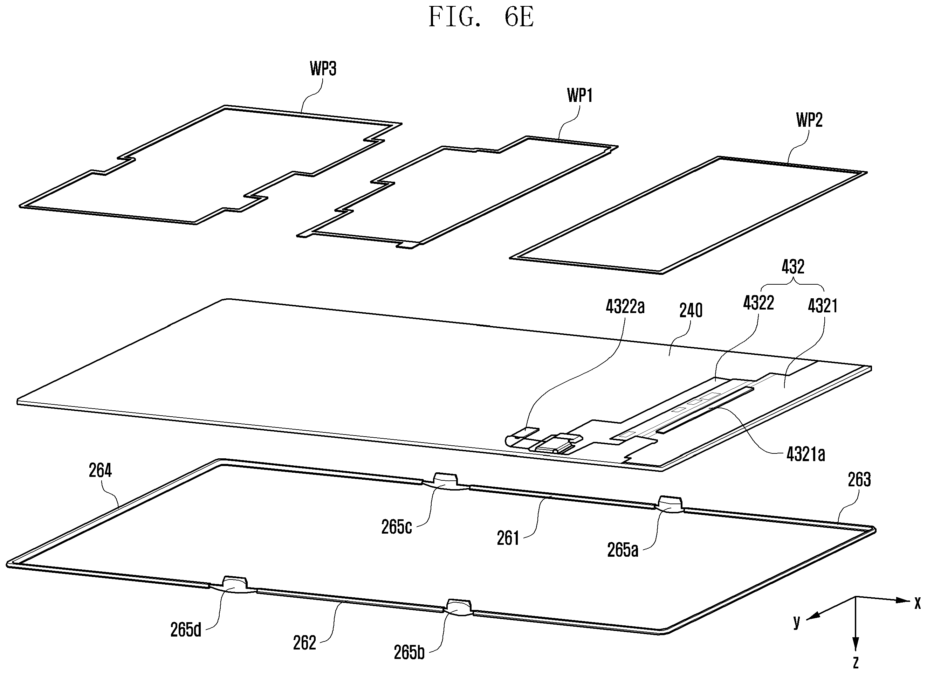

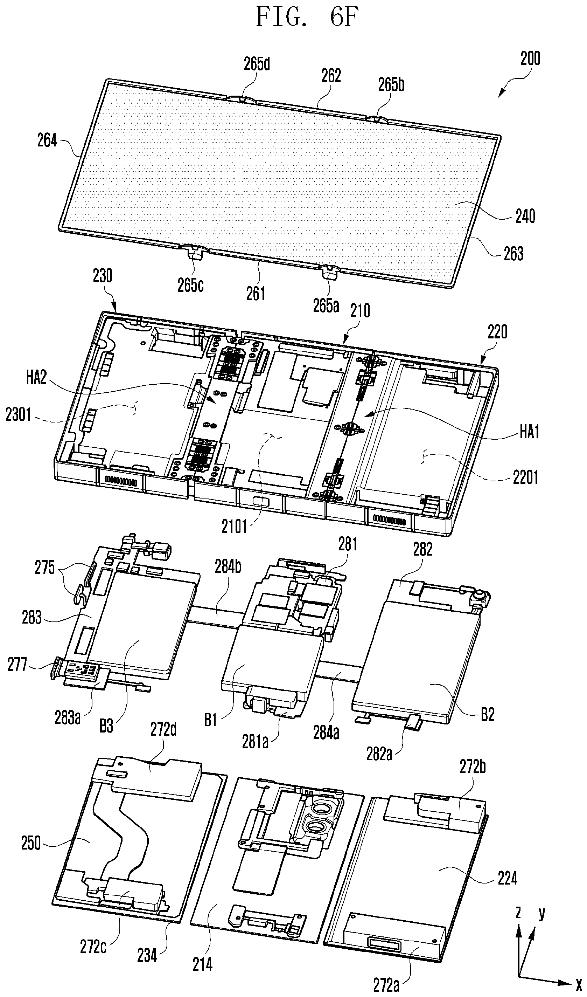

FIGS. 6A to 6E are rear exploded perspective views of a multi-foldable electronic device according to various embodiments of the disclosure. FIGS. 6B to 6E are enlarged views of respective areas of the exploded perspective view of the multi-foldable electronic device of FIG. 6A. FIG. 6F is a front exploded perspective view of the multi-foldable electronic device according to various embodiments of the disclosure.

Referring to FIGS. 6A to 6F, the multi-foldable electronic device 200 may include a first side surface member 213, a second side surface member 223 rotatably coupled to one side of the first side surface member 213 via a first hinge assembly HA1, and a third side surface member 233 rotatably coupled to the other side of the first side surface member 213 via a second hinge assembly HA2. In an embodiment, the multi-foldable electronic device 200 may include a first housing 210 (e.g., the first housing 210 in FIG. 6F) configured to include a first space 2101 by a first rear surface cover 214 coupled with the first side surface member 213, a second housing 220 (e.g., the second housing 220 in FIG. 6F) configured to include a second space 2201 by a second rear surface cover 224 coupled with the second side surface member 223, and a third housing 230 (e.g., the third housing 230 in FIG. 6F) configured to include a third space 2301 by a third rear surface cover 234 coupled with the third side surface member 233. In an embodiment, the first side surface member 213 may include a first support member 213a extending or structurally coupled to at least a portion of the first space 2101. In an embodiment, the second side surface member 223 may include a second support member 223a extending or structurally coupled to at least a portion of the second space 2201. In an embodiment, the third side surface member 233 may include a third support member 233a extending or structurally coupled to at least a portion of the third space 2301. In an embodiment, at least some of the first, second, and third support members 213a, 223a, and 233a may be used as a support structure for supporting at least a portion of the flexible display 240. In an embodiment, at least some of the first, second, and third support members 213a, 223a, and 233a may be used as a support structure for supporting at least some of multiple electronic components which will be described later.

According to various embodiments, the multi-foldable electronic device 200 may include a flexible display 240 disposed to be supported by the first side surface member 213, the first hinge assembly HA1, the second side surface member 223, the second hinge assembly HA2, and the third side surface member 233. In an embodiment, the edge of the flexible display 240 may be covered by first to fourth protection frames 261 to 264 and first to fourth protection members 265a to 265d, which are disposed on the first, second and third side surface members 213, 223, and 233, to be at least partially invisible from the outside. In an embodiment, the multi-foldable electronic device 200 may include a sub-display 250 disposed in the third space 2301 to be visible from the outside through at least a portion of the third rear surface cover 234.

According to various embodiments, the multi-foldable electronic device 200 may include multiple electronic components disposed in the first, second, and third housings 210, 220, and 230. In an embodiment, the multiple electronic components may include one or more boards 281, 281a, 282, 282a, 283, and 283a (e.g., printed circuit boards (PCBs)), one or more connection boards 281b, 282b, and 283b (e.g., flexible printed circuit boards (FPCBs)), one or more wiring members 284a and 284b, one or more batteries B1, B2, and B3, one or more speakers 272a, 272b, 272c, and 272d, one or more cameras 273a, 273b, and 273c, one or more magnets M1, M2, M3, M4, M5, M6, M7, and M8, one or more key buttons 275, one or more socket devices 277, one or more vibration motors 285, one or more waterproofing members WP1, WP2, and WP3, and one or more antenna structures AR1 and AR2.

According to various embodiments, the one or more boards 281, 282, and 283 may include a first board 281 (e.g., a first printed circuit board) disposed in the first space 2101 of the first housing 210, a second board 282 (e.g., a second printed circuit board) disposed in the second space 2201 of the second housing 220, and a third board 283 (e.g., a third printed circuit board) disposed in the third space 2301 of the third housing 230. In an embodiment, the one or more boards 281a, 282a, and 283a may include a first sub-board 281a (e.g., a first sub-printed circuit board) disposed in the first space 2101 at a position spaced apart from the first board 281, a second sub board 282a (e.g., a second sub-printed circuit board) disposed in the second space 2201 at a position spaced apart from the second board 282, and a third sub-board 283a (e.g., a third sub-printed circuit board) disposed in the third space 2301 at a position spaced apart from the third board 283. In an embodiment, the first board 281 and the first sub-board 281a may be disposed to be supported by a first support bracket 279a and a second support bracket 279b disposed in the first space 2101. In some embodiments, the second board 282 and the second sub-board 282a disposed in the second space 2201, and the third board 283 and the third sub-board 283a disposed in the third space 2301 may also be disposed to be supported by at least one support bracket.

According to various embodiments, the one or more connection boards 281a, 282b, and 283b may include a first connection board 281b that electrically interconnects the first board 281 and the first sub-board 281a in the first space 2101, a second connection board 282b that electrically interconnects the second board 282 and the second sub-board 282a in the second space 2201, and a third connection board 283b that electrically interconnects the third board 283 and the third sub-board 283a in the third space 2301. In an embodiment, at least one of the first, second, and third connection boards 281b, 282b, and 283b may include a flexible printed circuit board (FPCB) and/or a flexible RF cable (FRC).

According to various embodiments, the at least one wiring members 284a and 284b may include a first wiring member 284a extending from the first space 2101 to the second space 2201 across the first hinge assembly HA1, and a second wiring member 284b extending from the first space 2101 to the third space 2301 across the second hinge assembly HA2. In an embodiment, the first and second wiring members 284a and 284b may include a flexible board FPCB having an elastic restoring force capable of accommodating the folding operation of each of the housings 210, 220, and 230. In an embodiment, the first board 281 and the second board 282 may be electrically connected to each other via the first wiring member 284a. In an embodiment, the first board 281 and the third board 283 may be electrically connected to each other via the second wiring member 284b.

According to various embodiments, the one or more batteries B1, B2, and B3 may include a first battery B1 disposed in the first space 2101, a second battery B2 disposed in the second space 2201, and a third battery B3 disposed in the third space 2301. In an embodiment, the first battery B1 may be electrically connected to the first board 281 and/or the first sub-board 281a. In an embodiment, the second battery B2 may be electrically connected to the second board 282 and/or the second sub-board 282a. In an embodiment, the third battery B3 may be electrically connected to the third board 283 and/or the third sub-board 283a. Accordingly, the first, second, and third batteries B1, B2, and B3 may provide power to the first, second, and third boards 281, 282, and 283 and/or the first, second, and third sub-boards 281a, 282a, and 283a electrically connected thereto via the first and second wiring members 284a and 284b. In an embodiment, the first battery B1 may be disposed between the first board 281 and the first sub-board 281a. In an embodiment, the second battery B2 may be disposed between the second board 282 and the second sub-board 282a. In an embodiment, the third battery B3 may be disposed between the third board 283 and the third sub-board 283a.

According to various embodiments, the one or more speakers 272a, 272b, 272c, and 272d may include a first speaker 272a electrically connected to the first sub-board 281a in the first space 2101, a second speaker 272b electrically connected to the first board 281 in the first space 2101, a third speaker 272c electrically connected to the third sub-board 283a in the third space 2301, and a fourth speaker 272d electrically connected to the third board 283 in the third space 2301.

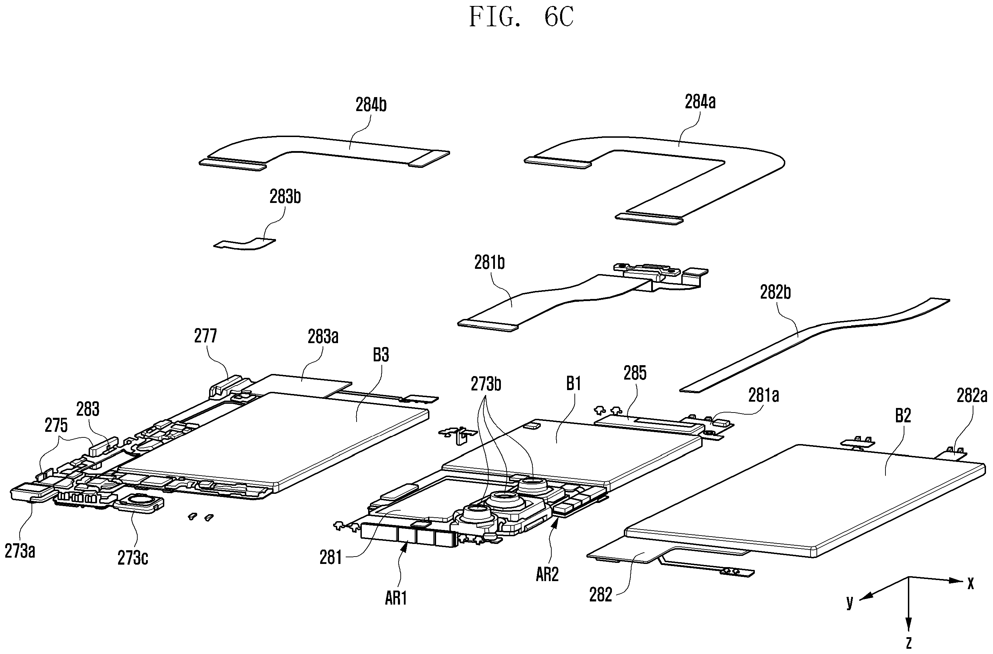

According to various embodiments, the one or more cameras 273a, 273b, and 273c may include a first camera 273a electrically connected to the third board 283 in the third space 2301 of the third housing 230, a second camera 273b electrically connected to the first board 281 in the first space 2101 of the first housing 210, and a third camera 273b electrically connected to the third board 283 in the third space 2301 of the third housing 283. The first camera 273a is arranged to photograph a subject in the direction where the flexible display 240 is oriented (e.g., the z-axis direction in FIG. 6C), and the third camera 273c may be arranged to photograph a subject in the direction where the third rear surface cover 234 is oriented (e.g., the -z-axis direction in FIG. 6C).

According to various embodiments, the one or more magnets M1, M2, M3, M4, M5, M6, M7, and M8 may include first and second magnets M1 and M2 disposed in the second space 2201 of the second housing 220, third and fourth magnets M3 and M4 disposed in the third space 2301 of the third housing 230 to be aligned with the first and second magnets M1 and M2, respectively, in the fully folded state, fifth and sixth magnets M5 and M6 disposed in the first space 2101 of the first housing 210, and seventh and eighth magnets M7 and M8 disposed in the second space 2201 of the second housing 220 to be aligned with the fifth and sixth magnets M5 and M6, in the fully folded state. In an embodiment, the first and second magnets M1 and M2 and the third and fourth magnets M3 and M4 may be arranged to generate attractive forces relative to each other in the fully folded state. In an embodiment, the fifth and sixth magnets M5 and M6 may be arranged to generate an attractive force relative to each other in the fully folded state. In an embodiment, one of the first to eighth magnets M1 to M8 may be replaced with an electromagnet configured to have polarity when power is applied. In some embodiments, the fifth to eighth magnets M5 to M8 may be omitted.

According to various embodiments, the one or more key buttons 275 may be disposed in the third space 2301 of the third housing 230 to be exposed through one side surface of the third side surface member 233 (e.g., the seventh surface 2332 in FIG. 2A). In an embodiment, the one or more socket devices 277 may also be disposed in the third space 2301 of the third housing 230 to be exposed through one side surface of the third side surface member 233 (e.g., the seventh surface 2332 in FIG. 2A). In an embodiment, the one or more vibration motors 285 may be disposed in the first space 2101 to be electrically connected to the first sub-board 281a. In some embodiments, the one or more vibration motor 285 may be disposed in the second space 2201 and/or the third space 2301.

According to various embodiments, the one or more waterproofing members WP1, WP2, and WP3 may include a first waterproofing member WP1 disposed between the first side surface member 213 and the flexible display 240, a second waterproofing member W2 disposed between the second side surface member 223 and the flexible display 240, and a third waterproofing member WP3 disposed between the third side surface member 233 and the flexible display 240. In an embodiment, the first, second, and third waterproofing members WP1, WP2, and WP3 may provide a waterproofed space to protect electronic components arranged through the first, second, and third support members 213a, 223a, and 233a from external moisture and/or foreign substances. In an embodiment, the first, second, and third waterproofing members WP1, WP2, and WP3 may include at least one of tape, adhesive, waterproofing dispenser, silicone, waterproofing rubber, and urethane.

According to various embodiments, the one or more antenna structures AR1 and AR2 may include a first antenna structure AR1 and a second antenna structure AR2 disposed in the first space 2101 of the first housing 210. In an embodiment, the first antenna structure AR1 and the second antenna structure AR2 may include a substrate, multiple antenna elements (e.g., conductive patches) disposed at predetermined intervals on the substrate, and an array antenna disposed on the substrate and including a wireless communication circuit (e.g., the wireless communication module 192 in FIG. 1) electrically connected to the multiple antenna elements. In an embodiment, the wireless communication circuit (e.g., the wireless communication module 192 in FIG. 1) may be configured to transmit or receive RF signals in a frequency band ranging from about 3 GHz to 300 GHz via the plurality of antenna elements. In an embodiment, the first antenna structure AR1 and the second antenna structure AR2 may form a directional beam pattern. In some embodiments, a wireless communication circuit (e.g., the wireless communication module 192 in FIG. 1) may be disposed on the first board 281. In an embodiment, the first antenna structure AR1 may be disposed in the first space 2101 such that a beam pattern is formed in a direction where the upper side surface of the first housing 210 (e.g., the second side surface 2132 of FIG. 2A) is oriented (e.g., the y-axis direction in FIG. 6C). In this case, the first antenna structure AR1 may be disposed such that a beam pattern is formed outward through a dielectric cover 210a disposed in the first housing 210. In some embodiments, the first antenna structure AR1 may be disposed such that a beam pattern is formed outward through a non-conductive member (e.g., polymer) formed as at least a portion of the first side surface member 213, without the dielectric cover 210a. In an embodiment, the second antenna structure AR2 may be disposed in the first space 2101 such that a beam pattern is formed in a direction where the first rear surface cover 214 of the first housing 210 is oriented (e.g., the -z axis direction in FIG. 6C).

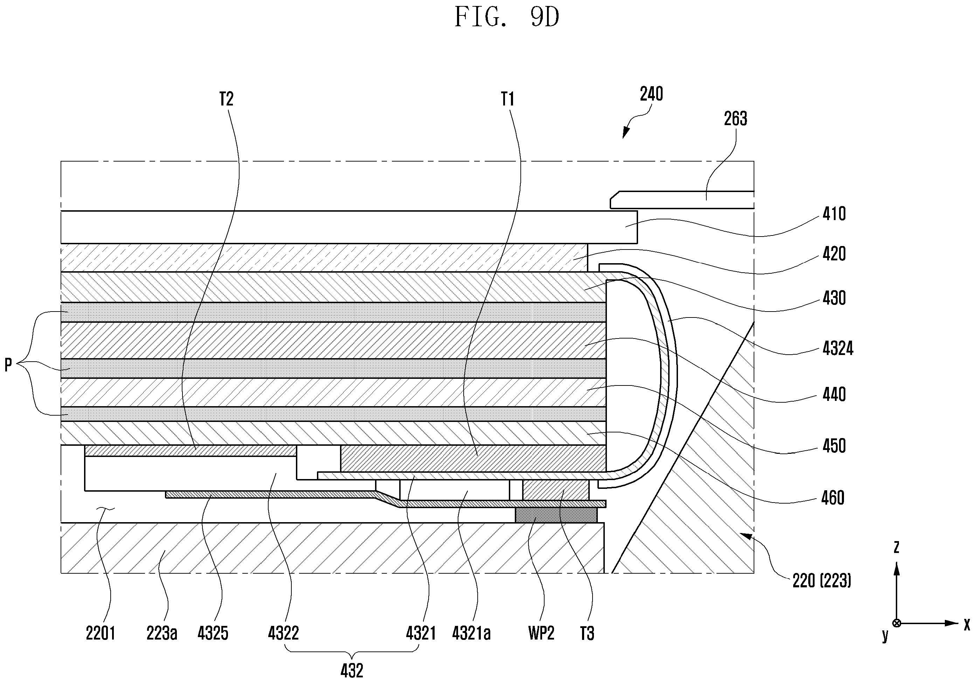

According to various embodiments, the flexible display 240 may include a bending portion 432 extending outward from a display panel (e.g., the display panel 430 in FIG. 9D) (e.g., a display panel portion) and disposed on the rear surface of the flexible display 240 in a folded manner. In an embodiment, the bending portion 432 may include an extension portion 4321 (e.g., an extension panel portion) extending from the display panel 430 and including a control circuit 4321a (e.g., a display driver integrated circuit (DDI)), and a flexible board 4322 (e.g., an FPCB) electrically connected to the extension portion 4321 and including multiple electrical elements. For example, in the flexible display 240, the display panel 430 and the bending portion 432 may be in a chip-on-plastic (COP) manner. For example, the extension portion 4321 (e.g., the extension panel portion) may include polyimide (PI) included in the substrate of the display panel 430. In an embodiment, the flexible board 4322 may include a connector 4322a to be electrically connected to the second board 282 disposed in the second space 2201. In an embodiment, the bending portion 432 may be disposed to extend between the display panel 430 and the second support member 223a in an area corresponding to one side surface of the second housing 220 (e.g., the fourth side surface 2232 in FIG. 2A), from the flexible display 240.

Electronic components according to exemplary embodiments of the disclosure may be appropriately arranged in the first space 2101 of the first housing 210, the second space 2201 of the second housing 220, and/or the third space 2301 of the third housing 230, which may allow for smooth operational connections and help slim the multi-foldable electronic device 200.

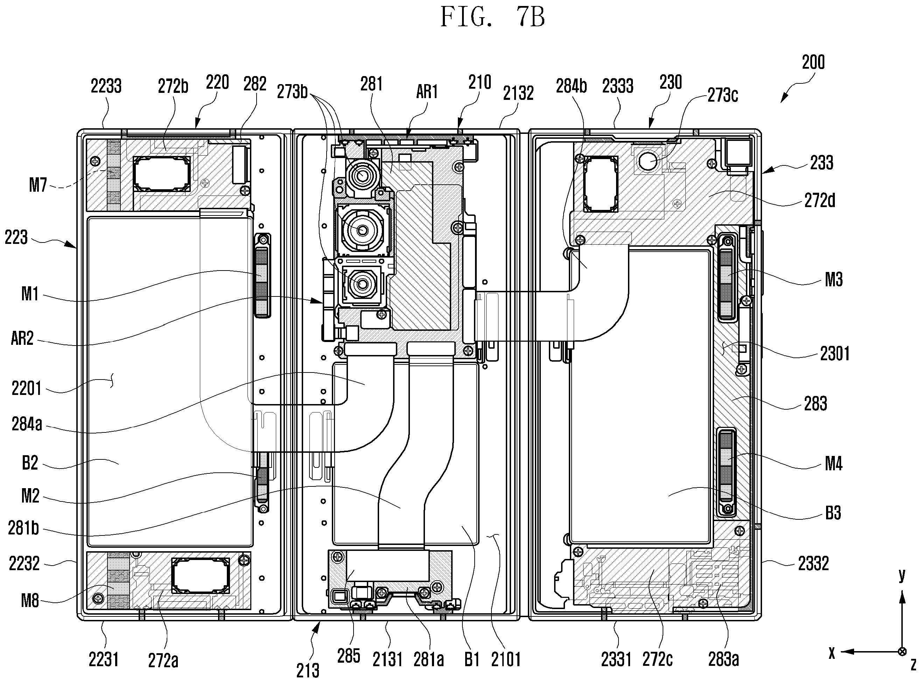

FIG. 7A is a front view of the multi-foldable electronic device according to various embodiments of the disclosure in a fully unfolded state, with the flexible display omitted. FIG. 7B is a rear view of the multi-foldable electronic device according to various embodiments of the disclosure in the fully unfolded state, with rear surface covers omitted.

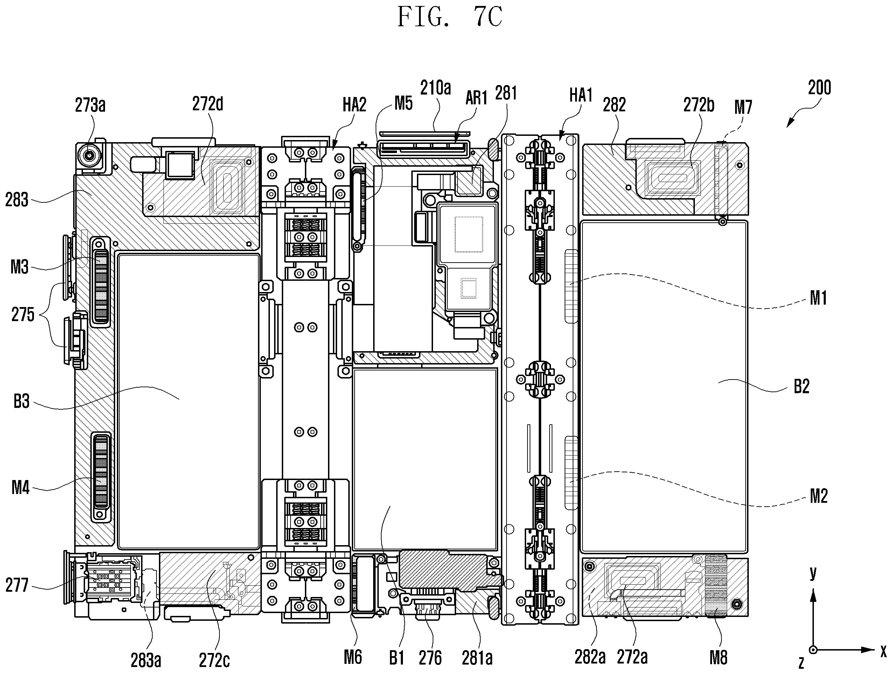

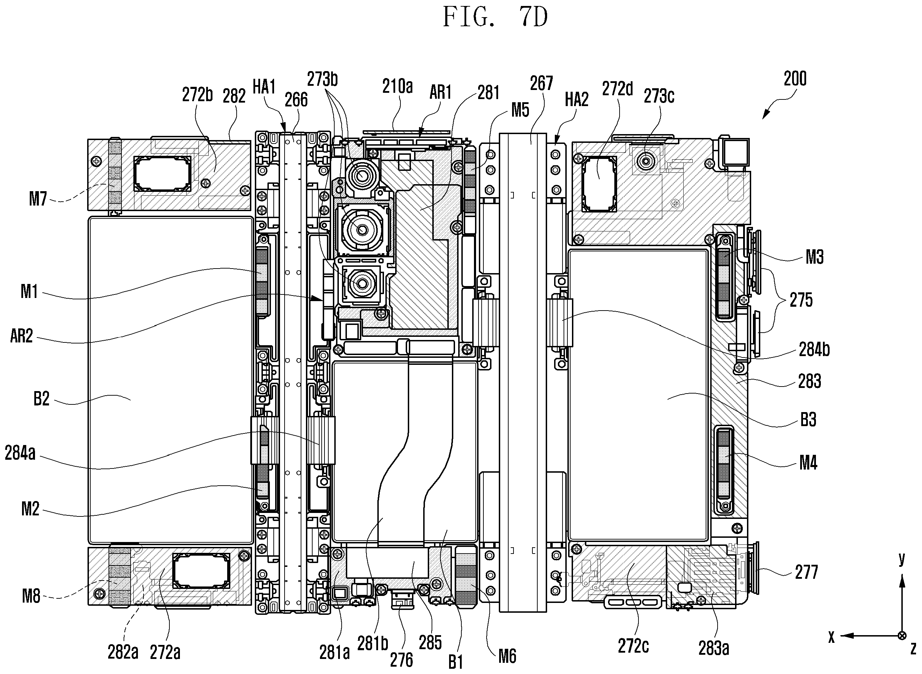

FIG. 7C is a view illustrating the configuration of the electronic device of FIG. 7A according to various embodiments of the disclosure, with the housings omitted. FIG. 7D is a view illustrating the configuration of the electronic device of FIG. 7B according to various embodiments of the disclosure, with the housings omitted.

In describing FIGS. 7A to 7D, components that are substantially the same as those of the electronic device described above are assigned the same reference numerals, and detailed descriptions thereof may be omitted.

Referring to FIGS. 7A to 7D, the multi-foldable electronic device 200 may include a first housing 210 including a first side surface member 213, a second housing 220 including a second side surface member 223 rotatably coupled to one side of the first housing 210 via a first hinge assembly HA1, and a third housing 230 including a third side surface member 233 rotatably coupled to the other side of the first housing 210 via a second hinge assembly HA2. In an embodiment, the multi-foldable electronic device 200 may include a first battery B1 disposed in the first space 2101 of the first housing 210, and a first board 281 and a first sub-board 281a connected via a first connection board 281b with the first battery B1 interposed therebetween. In an embodiment, the multi-foldable electronic device 200 may include a second battery B2 disposed in the second space 2201 of the second housing 220, and a second board 282 and a second sub-board 282a connected via a second connection board 282b with the second battery B2 interposed therebetween. In an embodiment, the multi-foldable electronic device 200 may include a third battery B3 disposed in the third space 2301 of the third housing 230, and a third board 283 and a third sub-board 283a connected via a third connection board 283b with the third battery B3 interposed therebetween.

According to various embodiments, the first battery B1, the second battery B2, and the third battery B3 have sizes that may be determined depending on the numbers and/or arrangement structure of electronic components arranged in the first space 2101, the second space 2201, and the third space 2301. For example, the first battery B1 may be configured to have the smallest size due to the arrangement structure of major components, such as the first board 281 including a processor (e.g., the processor 120 in FIG. 1), the first sub-board 281a, the second camera 273b, the antenna structures AR1 and AR2, or the connector port 276 disposed in the first space 2101. In an embodiment, the second battery B2 may be configured to have the largest size due to the arrangement structure of electronic components such as the speakers 272a and 272b, the second board 282, or the second sub-board 282a. In an embodiment, the third battery B3 may be configured to have a size larger than the first battery B1 and smaller than the second battery B2 due to the arrangement structure of electronic components such as the speakers 272c and 272d, the third board 283, the third sub-board 283a, the key buttons 275, or the connector port 276. Without being limited thereto, however, the size of each of the first, second, and third batteries B1, B2, and B3 may vary depending on the layout design of the electronic components arranged in the first, second, and third spaces 2101, 2201, and 2031.

According to various embodiments, when the multi-foldable electronic device 200 is in the fully unfolded state, it may be advantageous to dispose the first camera 273a at a position where the seventh side surface 2332 and the eight side surface 2333 meet in the third space 2301 of the third housing 230 (e.g., the left upper end). For example, the arrangement structure of the first camera 273a disposed at a corner of the third housing 230 may solve the problem that, in the folded or intermediate state, the first camera 273a is unusable when disposed in the first housing 210 and/or the second housing 220, and may be advantageous in that the first camera is usable even in the intermediate state in which only the first housing 210 and the second housing 220 are folded. In some embodiments, although it is considered that a user holds the multi-foldable electronic device, the first camera 273a may be disposed at various positions along and near the seventh side surface 2332 of the third housing 230. In some embodiments, the first camera 273a may be disposed at various positions along and near the eighth side surface 2333 or the sixth side surface 2331 of the third housing 230.

According to various embodiments, it may be advantageous to dispose the key buttons 275 and/or the socket devices 277 in the third space 2301 of the third housing 230 to be exposed through the seventh side surface 2332. For example, when the multi-foldable electronic device 200 is in the fully folded state and the sub-display 250 is facing upward (e.g., the state in FIG. 3A), the key buttons 275 and/or the socket device 277 are located at the right side of the multi-foldable electronic device 200 to be exposed to the outside, which may help improve convenience of use.

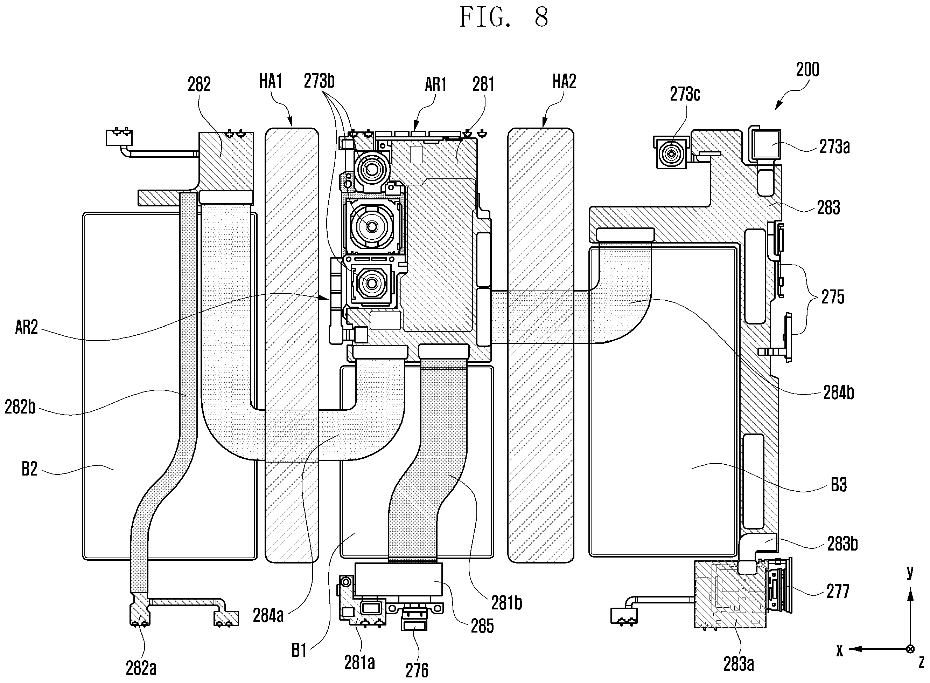

FIG. 8 is a view illustrating an electrical connection structure between boards in the multi-foldable electronic device according to various embodiments of the disclosure.

Referring to FIG. 8, the multi-foldable electronic device 200 may include a first board 281 disposed in the first space 2101 of the first housing 210, a second board 282 disposed in the second space 2201 of the second housing 220, and a third board 283 disposed in the third space 2301 of the third housing 230. In an embodiment, the multi-foldable electronic device 200 may include a first sub-board 281a disposed at a position spaced apart from the first board 281, a second sub-board 281a disposed at a position spaced apart from the second board 282, and a third sub-board 282a disposed at a position spaced apart from the third board 283 in the third space 2301. In an embodiment, the multi-foldable electronic device 200 may include a first connection board 281b interconnecting the first board 281 and the first sub-board 281a, a second connection board 282b electrically interconnecting the second board 282 and the second sub-board 282a, a third connection board 283b electrically interconnecting the third board 283 and the third sub-board 283a. In an embodiment, the multi-foldable electronic device 200 may include a first wiring member 284a extending from the first space 2101 of the first housing 210 to the second space 2201 of the second housing 220 across the first hinge assembly HA1, and a second wiring member 284b extending from the first space 2101 of the first housing 210 to the third space 2301 of the third housing 230 across the second hinge assembly HA2.

According to various embodiments, the multi-foldable electronic device 200 includes three housings 210, 220, and 230 that are rotatable relative to each other via the hinge assemblies HA1 and HA2, but may be configured such that the first, second, and third boards 281, 282, and 283 disposed in respective housing are electrically connected to the first, second, and third sub-boards 281a, 282a, and 283a via the first, second, and third boards 281b, 282b, and 283b. In addition, because the first, second, and third boards 281, 282, and 283 are electrically connected to each other via the first and second wiring members 284a and 284b, the multi-foldable electronic device 200 may be configured to operate as a unified device, and electronic components disposed in each of the housing 210, 220, and 230 are also configured to be operatively connected, which may help improve convenience of use.

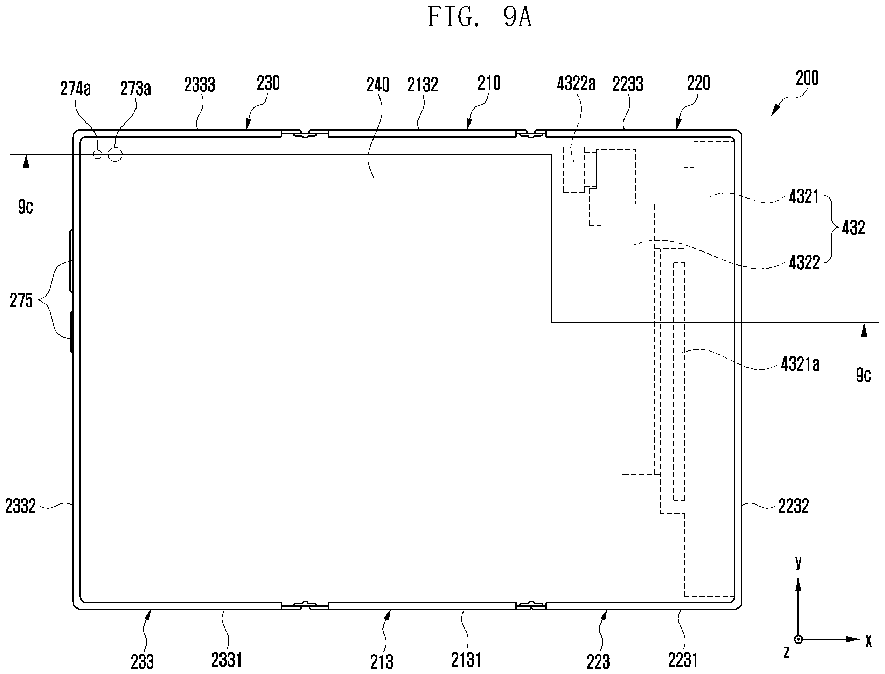

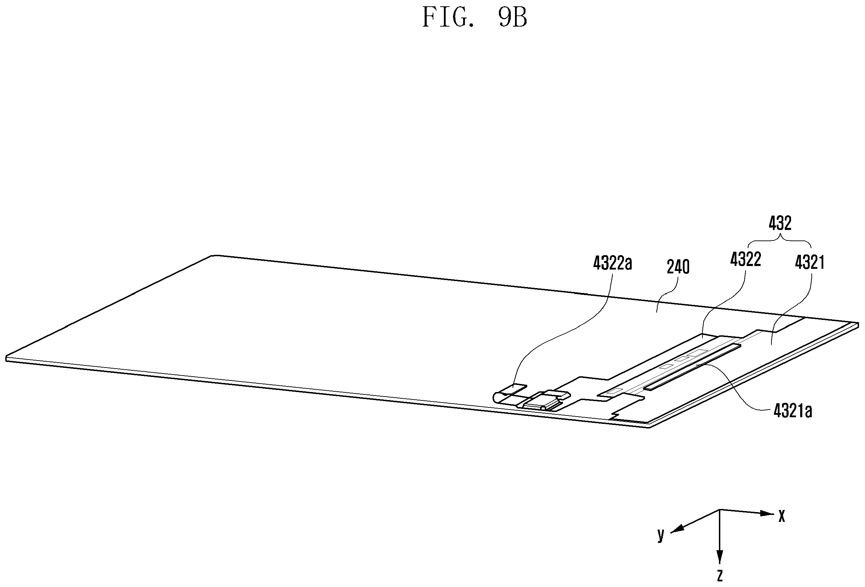

FIG. 9A is a plan view illustrating a multi-foldable electronic device in a fully unfolded state, in which the arrangement of an extension panel portion of a flexible display according to various embodiments of the disclosure is schematically illustrated. FIG. 9B is a perspective view illustrating the configuration of a flexible display according to various embodiments of the disclosure.

Referring to FIGS. 9A and 9B, a flexible display 240 may include a bending portion 432 extending outward from a display panel 430 and disposed on the rear surface of the flexible display 240 in a folded manner. In an embodiment, the bending portion 432 may include an extension portion 4321 (e.g., an extension panel portion) extending from the display panel 430 and including a control circuit 4321a (e.g., a display driver integrated circuit), and a flexible board 4322 (e.g., an FPCB) electrically connected to the extension portion 4321 and including multiple electrical elements. In an embodiment, the flexible board 4322 may include a connector 4322a to be electrically connected to the second board 282 disposed in the second space 2201.

According to various embodiments, it may be advantageous to dispose the bending portion 432 of the flexible display 240 along and near the fourth side surface 2232 of the second housing 220 (e.g., the right side surface of the multi-foldable electronic device 200 in the fully unfolded state in FIG. 9A). For example, due to the wiring structure, it is necessary for the bending portion 432 to have a length substantially similar to the length of one side of the flexible display 240. In the fully unfolded state of FIG. 9A, it may be difficult to arrange the upper side surface (e.g., the second side surface 2132, the fifth side surface 2233, and the eighth side surface 2333) and the lower side surface (e.g., the first side surface 2131, the third side surface 2231, and the sixth side surface 2331) of the multi-foldable electronic device 200 due to the possibility of damage to the wiring structure and/or the control circuit 4321a due to frequent folding operations. In addition, in the fully unfolded state of FIG. 9A, due to the preferential arrangement structure of other electronic components (e.g., the key buttons 275 and/or socket devices 277) that are to be necessarily disposed on the left side surface of the multi-foldable device 200 (e.g., the seventh side surface 2332), it may be difficult to dispose the bending portion 432 at the corresponding position.

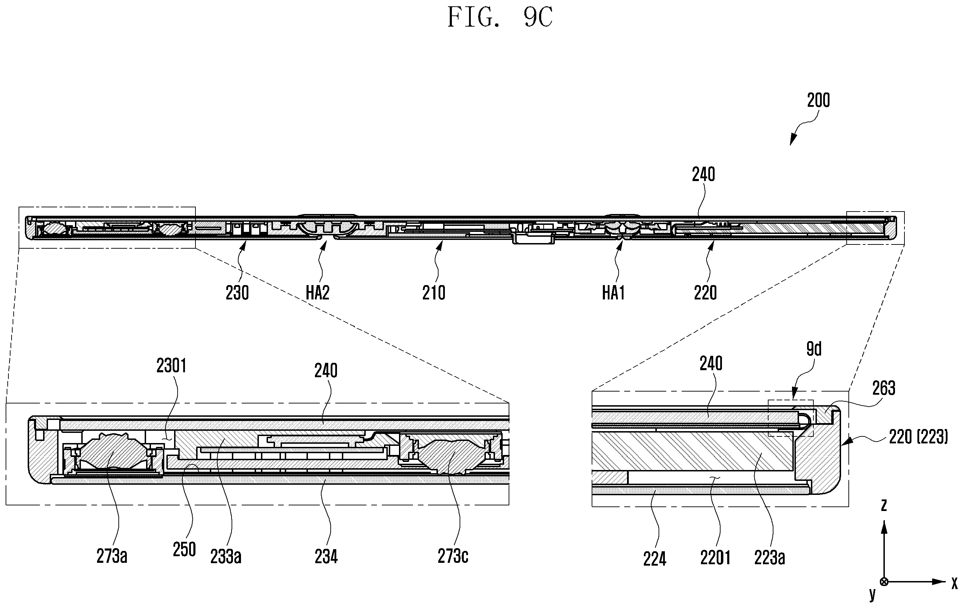

FIG. 9C is a cross-sectional view of the electronic device according to various embodiments of the disclosure taken along line 9c-9c in FIG. 9A. FIG. 9D is an enlarged view of area 9d of FIG. 9C according to various embodiments of the disclosure.

Referring to FIGS. 9C and 9D, the flexible display 240 may include a window layer 410, and a polarizer (POL) 420 (e.g., a polarizing film), a display panel 430, a polymer layer 440, a support plate 450, and at least one lower layer 460 which are sequentially disposed on the rear surface of the window layer 410 (e.g., in the -z-axis direction). In an embodiment, the window layer 410, the polarizer 420, the display panel 430, the polymer layer 440, the support plate 450, and at least one lower layer 460 may be attached to each other by an adhesive P (or a bonding agent). For example, the adhesive P may include at least one of an optical clear adhesive (OCA), a pressure-sensitive adhesive (PSA), a heat-responsive adhesive, a general adhesive, or double-sided tape.

According to various embodiments, the window layer 410 may include a glass layer (e.g., ultra-thin glass (UTG) or foldable thin glass (FTG)) or a polymer layer. In some embodiments, the window layer 410 may be arranged in multiple layers to include a glass layer and a polymer layer.

According to various embodiments, the display panel 430 may include a plurality of pixels and a wiring structure (e.g., an electrode pattern). In an embodiment, the polarizer 420 may be disposed to selectively allow light, which is generated from a light source of the display panel 430 and vibrates in a predetermined direction, to pass therethrough. In an embodiment, the display panel 430 and the polarizer 420 may be integrally formed. In an embodiment, the flexible display 240 may include a touch panel (not illustrated).

According to various embodiments, the polymer layer 440 may be disposed under the display panel 430, thereby providing a dark background for ensuring visibility of the display panel 430, and may be made of a buffering material for a buffering action. In some embodiments, in order to ensure waterproofing of the flexible display 240, the polymer layer 440 may be removed or disposed under the support plate 450. In some embodiments, the polymer layer 440 may be omitted when the support plate 450 is made of an opaque material.

According to various embodiments, the support plate 450 may provide rigid and bendable properties to the flexible display 130. For example, the support plate 450 may be made of a non-metallic sheet material, such as fiber reinforced plastics (FRP) (e.g., carbon fiber reinforced plastics (CFRP) or glass fiber reinforced plastics (GFRP)), having a rigid (or inflexible) property to support the display panel 430, or a metallic material. In an embodiment, the support plate 450 may include a pattern (e.g., multiple openings and/or recesses) which is formed in an area corresponding to folding areas (e.g., the fourth area 240d and/or the fifth area 240e in FIG. 2B) of the flexible display 240, which may help improve foldability.

According to various embodiments, the at least one lower layer 460 may include at least one reinforcement plate disposed under the support plate 450 to improve surface quality and provide rigidity of the flexible display 240 and/or at least one digitizer disposed to use an electronic pen.

According to various embodiments, the flexible display 240 may include a bending portion 432 extending outward from the display panel 430 and disposed to be folded to the rear surface of the flexible display 240 (e.g., the at least one lower layer 460). In an embodiment, the flexible display 240 may further include a bending portion protection layer 8324 (e.g., a bending protection layer (BPL)) laminated on the outer surface of the bending portion 432 to protect at least a portion of the bending portion 432. In an embodiment, the bending portion 432 may include an extension portion 4321 extending from the display panel 430 and including a control circuit 4321a, and a flexible board 4322 connected to the extension portion 4321 and including multiple electrical elements. In an embodiment, the bending portion 432 may be bent to the rear surface of the flexible display 230 and then attached to the lower layer 460. In an embodiment, the extension portion 4321 may be attached to the lower layer 460 on the rear surface of the flexible display 230 via a first adhesive member T1. According to an embodiment, the flexible board 4322 may be attached to the lower layer 460 via a second adhesive member T2. For example, the first adhesive member T1 is a tape member with a predetermined thickness, and may also serve as a spacer having a thickness to maintain the bent state of the extension portion 4321 and to compensate for the height difference between the extension portion 4321 and the flexible board 4322. In an embodiment, the first adhesive member T1 and/or the second adhesive member T2 may be made of a waterproofing member (e.g., waterproofing tape) because it is at least partially exposed to the outside. In an embodiment, the second adhesive member T2 may include conductive tape to electrically connect the ground of the flexible board 4322 to the lower layer 460.

According to various embodiments, the control circuit 4321a disposed on the extension portion 4321 may be protected by a cover member 4325 attached to cover at least a portion of the extension portion 4321 from at least a portion of the flexible board 4322. In an embodiment, the control circuit 4321a may be disposed between the flexible board 4322 and a third adhesive member T3 disposed between the cover member 4325 and the extension portion 4321, thereby being sealed. In an embodiment, the third adhesive member T3 may be made of a waterproofing member (e.g., waterproofing tape). In an embodiment, the third adhesive member T3 may be disposed between the bending portion protection layer 4324 and the control circuit 4321a. In an embodiment, at least a portion of the cover member 4325, which is in direct contact with external moisture and/or foreign substances, may be made of a material with a waterproofing structure. In an embodiment, at least a portion of the cover member 4325 may be attached to at least a portion of the second support member 223a via the second waterproofing member WP2.

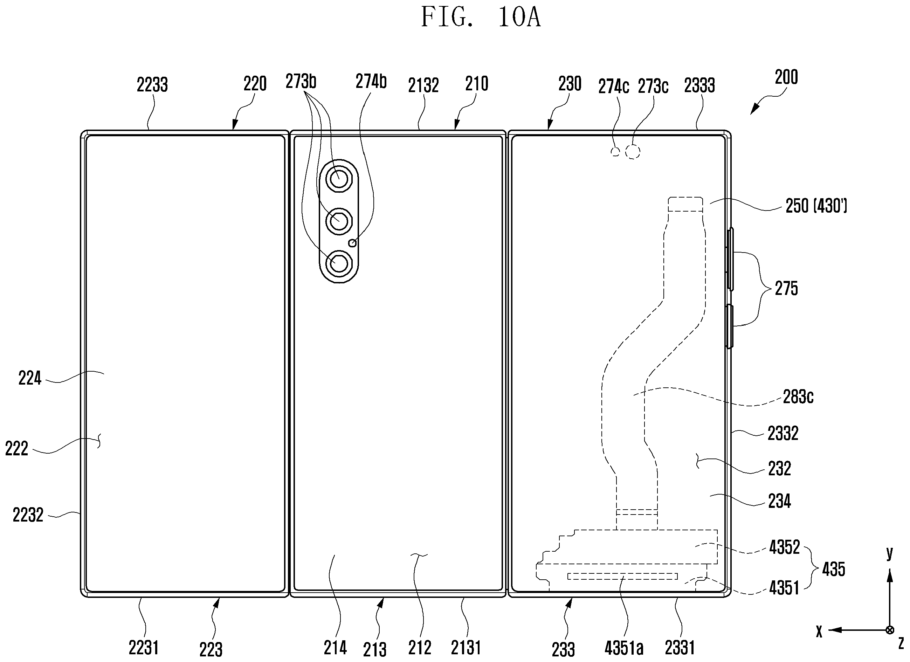

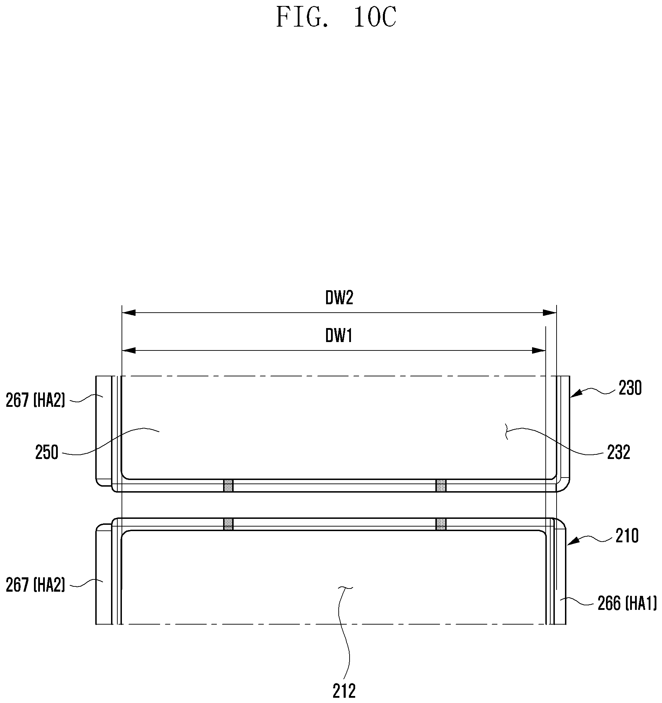

FIG. 10A is a rear view of a multi-foldable electronic device in a fully unfolded state in which the arrangement of an extension panel portion of a sub-display according to various embodiments of the disclosure is schematically illustrated. FIG. 10A is a view illustrating the configuration of the sub-display according to various embodiments of the disclosure. FIG. 10C is a view comparing the arrangements of sub-displays for respective housings according to various embodiments of the disclosure.

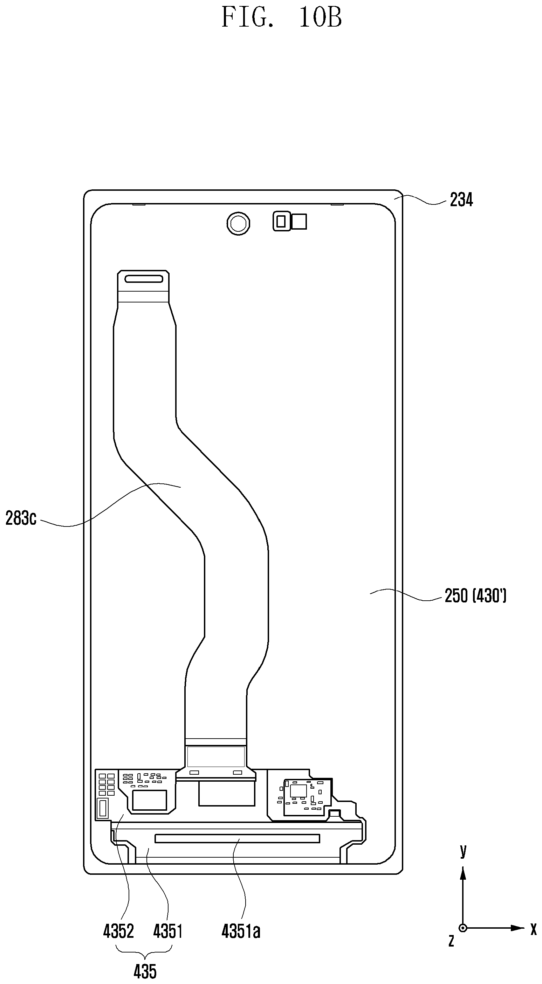

Referring to FIGS. 10A and 10B, a multi-foldable electronic device 200 may include a sub-display 250 disposed to be visible from the outside through the third rear surface cover 234 disposed on the sixth surface 232 of the third housing 230. In an embodiment, the sub-display 250 may also include an extension portion 4351 (e.g., an extension panel portion) bent from a display panel 430' (e.g., a display panel portion) to the rear surface of the sub-display 250 and including a control circuit 4351a (e.g., a display driver integrated circuit), and a bending portion 435 including a flexible board 4352 (e.g., an FPCB) electrically connected to the extension portion 4351. In an embodiment, the flexible board 4352 may be electrically connected to a third board (e.g., the third board 283 in FIG. 8) via the fourth connection board 283c.

According to various embodiments, it may be advantageous to dispose the bending portion 435 of the sub-display 250 near the sixth side surface 2331 of the third housing 230. For example, this is because it may be difficult to dispose the bending portion 435 at the corresponding position due to a preferential arrangement structure of other electronic components (e.g., the key buttons 275 and/or the socket devices 277), which are essentially disposed on the seventh side surface 2332 of the third housing 230 and the preferential arrangement structure of the third camera 273c and/or the third sensor 274c on the eighth side surface 2333.

Referring to FIG. 10C, the sub-display 250 may be disposed through the sixth surface 232 of the third housing 230 exposed to the outside when the multi-foldable electronic device 200 is folded. For example, the second surface 212 of the first housing 210 may also be exposed to the outside in the fully folded state. However, it may be advantageous to dispose the sub-display 250 on the third housing 230 because the first arrangement width DW1 for arranging the sub-display 250 allowed by the first hinge assembly HA1 and the second hinge assembly HA2 disposed at opposite sides of the first housing 210 is smaller than the second arrangement width DW2 for arranging the sub-display 250 allowed by the second hinge assembly HA2 arranged at one side of the third housing 230.

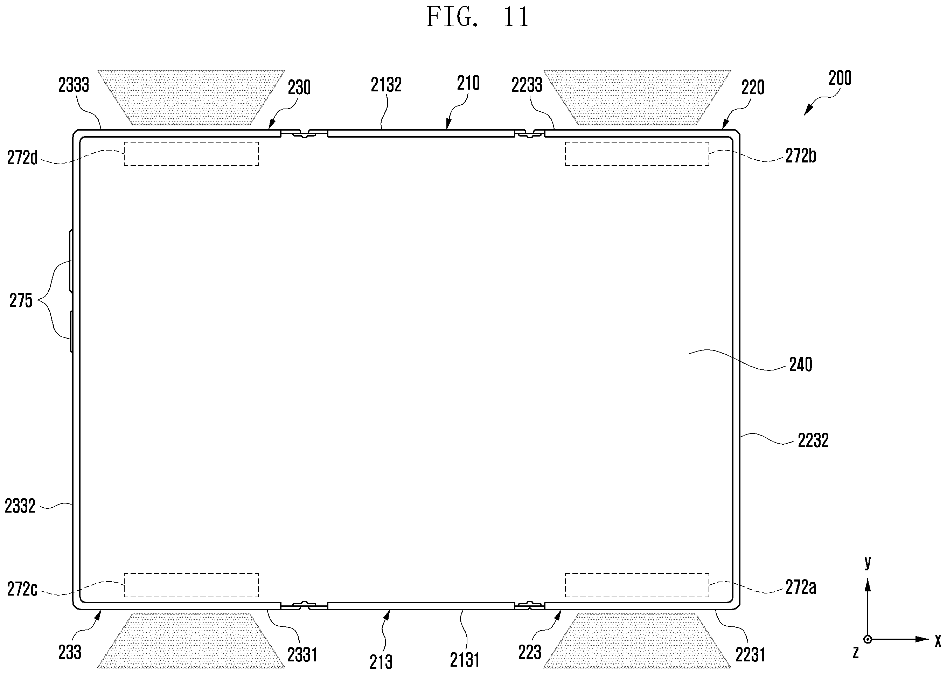

FIG. 11 is a plan view of a multi-foldable electronic device in the fully unfolded state illustrating an arrangement structure of speakers according to various embodiments of the disclosure.

Referring to FIG. 11, the multi-foldable electronic device may include a first speaker 272a disposed to emit sound through the third side surface 2231 of the second housing 220, a second speaker 272b disposed to emit sound through the fifth side surface 2233, a third speaker 272c disposed to emit sound through the sixth side surface 2331 of the third housing 230, and a fourth speaker 272d emit sound through the eighth side surface 2333. In an embodiment, the first to fourth speakers 272a, 272b, 272c, and 272d may be symmetrically arranged in positions, which are always exposed to the outside regardless of whether the multi-foldable electronic device 200 is in the fully unfolded state or the fully folded state, in order to implement stereo sound (e.g., three-dimensional sound). In some embodiments, the first speaker 272a and the second speaker 272b may be omitted. In some embodiments, the third speaker 272c and the fourth speaker 272d may be omitted.

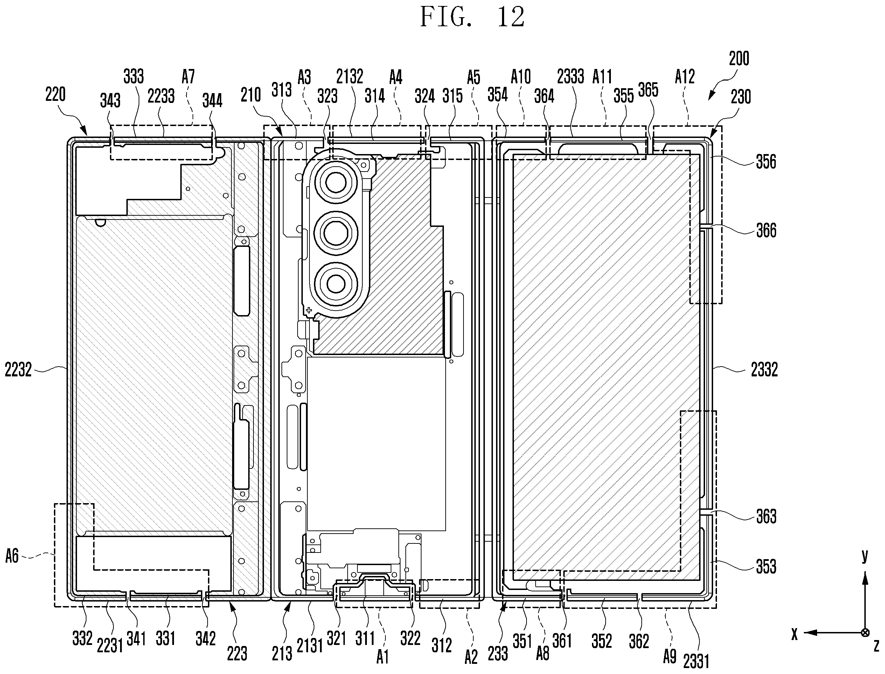

FIG. 12 is a view illustrating the configuration of a multi-foldable electronic device in which an antenna arrangement structure according to various embodiments of the disclosure is illustrated.

Referring to FIG. 12, the multi-foldable electronic device 200 may include one or more antennas A1, A2, A3, A4, A5, A6, A7, A8, A9, A10, A11, and A12 which operate through at least some of conductive side surface members 213, 223, and 233 included in the first, second, and third housings 210, 220, and 230. In an embodiment, the one or more antennas A1, A2, A3, A4, A5, A6, A7, A8, A9, A10, A11, and A12 may be configured with one or more conductive portions 311, 312, 313, 314, 315, 331, 332, 333, 351, 352, 353, 354, 355, and 356, which are split by one or more split portions 321, 322, 323, 324, 341, 342, 343, 344, 361, 362, 363, 364, 365, and 366 and formed as at least part of the side surface members 213, 223, and 233. For example, the one or more split portions 321, 322, 323, 324, 341, 342, 343, 344, 361, 362, 363, 364, 365, and 366 may include a non-conductive member (e.g., polymer) coupled to a conductive member (e.g., metal) through injection molding.

According to various embodiments, the one or more antennas A1, A2, A3, A4, A5, A6, A7, A8, A9, A10, A11, and A12 may be configured to operate in at least one frequency band, either individually or in combination of at least two antennas. In an embodiment, the multi-foldable electronic device 200 may include a wireless communication circuit (e.g., the wireless communication module 192 in FIG. 1) disposed on a first board (e.g., the first board 281 in FIG. 8). In some embodiments, the wireless communication circuit (e.g., the wireless communication module 192 of FIG. 1) may be disposed on a second board (e.g., the second board 282 in FIG. 8) and/or a third board (e.g., the third board 283 in FIG. 8). In an embodiment, the wireless communication circuit (e.g., the wireless communication module 192 in FIG. 1) may be configured to transmit or receive RF signals in a predetermined frequency band via the one or more antennas A1, A2, A3, A4, A5, A6, A7, A8, A9, A10, A11, and A12. In an embodiment, the predetermined frequency band may include at least one of the following: a low band of about 600 MHz to 960 MHz, a mid-band of about 1700 MHz to 2200 MHz, a high band of about 2300 MHz to 2800 MHz, a sub-6 band of about 5 GHz to 6 GHz, a UHB band of 3.2GHz to 4.5GHz, and bands for Bluetooth (BT), global positioning system (GPS), or wireless fidelity (WI-FI).

According to various embodiments, the multi-foldable electronic device 200 may include a first conductive portion 311 and a second conductive portion 312 split by a first split portion 321 and a second split portion 322 spaced apart from the first split portion 321 in the first side surface 2131 of the first housing 210. In an embodiment, the first conductive portion 311 may be configured to operate at least partially as a first antenna A1, and the second conductive portion 312 may be configured to operate at least partially as a second antenna A2. In an embodiment, the multi-foldable electronic device 200 may include a third conductive portion 313, a fourth conductive portion 314, and a fifth conductive portion 315, which are split by a third split portion 323 and a fourth split portion 324 spaced apart from the third split portion 323 in the second side surface 2132 of the first housing 210. In an embodiment, the third conductive portion 313 may be configured to operate at least partially as a third antenna A3, the fourth conductive portion 314 may be configured to operate at least partially as a fourth antenna A4, and the fifth conductive portion 315 may be configured to operate at least partially as a fifth antenna A5.

According to various embodiments, the multi-foldable electronic device 200 may include a sixth conductive portion 331 and a seventh conductive portion 332 split by a fifth split portion 341 and a sixth split portion 342 spaced apart from the fifth split portion 341 in the third side surface 2231 of the second housing 220. In an embodiment, the sixth conductive portion 331 and the seventh conductive portion 332 may be configured to operate at least partially as a sixth antenna A6. According to an embodiment, the multi-foldable electronic device 200 may include an eighth conductive portion 333 split by a seventh split portion 343 and an eighth split portion 344 spaced apart from the seventh split portion 343 in the fifth side surface 2233 of the second housing 220. In an embodiment, the eighth conductive portion 333 may be configured to operate at least partially as a seventh antenna A7.

According to various embodiments, the multi-foldable electronic device 200 may include a ninth conductive portion 351, a tenth conductive portion 352, and an eleventh conductive portion 353, which are split by a ninth split portion 361 and a tenth split portion 362 spaced apart from the ninth split portion 361 in the sixth side surface 2331 of the third housing 230. In an embodiment, the ninth conductive portion 351 may be configured to operate at least partially as an eighth antenna A8, and the tenth conductive portion 352 and the eleventh conductive portion 353 may be configured to operate at least partially as a ninth antenna A9. In an embodiment, the multi-foldable electronic device 200 may include a twelfth conductive portion 354, a thirteenth conductive portion 355, and a fourteenth conductive portion 356, which are split by an eleventh split portion 364 and a twelfth split portion 365 spaced apart from the eleventh split portion 364 in the eighth side surface 2333 of the third housing 230. In an embodiment, the twelfth conductive portion 354 may be configured to operate at least partially as a tenth antenna A10, the thirteenth conductive portion 355 may be configured to operate at least partially as an eleventh antenna A11, and the fourteenth conductive portion 356 may be configured to operate as a twelfth antenna A12.

According to various embodiments, when the multi-foldable electronic device 200 is in the fully folded state, the first split portion 321, the sixth split portion 342, and the tenth split portion 362 may be arranged in positions aligned to coincide with each other in order to ensure radiation performance of the one or more antennas A1, A2, A3, A4, A5, A6, A7, A8, A9, A10, A11, and A12. In an embodiment, the second split portion 322, the fifth split portion 341, and the ninth split portion 361 may be arranged in positions aligned to coincide with each other when the multi-foldable electronic device 200 is in the fully folded state. In an embodiment, the third split portion 323, the eighth split portion 344, and the twelfth split portion 365 may also be arranged in positions aligned to coincide with each other when the multi-foldable electronic device 200 is in the fully folded state. In an embodiment, the fourth split portion 324, the seventh split portion 343, and the eleventh split portion 364 may also be arranged in positions aligned to coincide with each other when the multi-foldable electronic device 200 is in the fully folded state.

According to various embodiments, a portable communication device (e.g., the multi-foldable electronic device 200 in FIG. 2A) includes a foldable housing including a first housing (e.g., the first housing 210 in FIG. 2A), a second housing (e.g., the second housing 220 in FIG. 2A), and a third housing (e.g., the third housing 230 in FIG. 2A), a first hinge assembly (e.g., the first hinge assembly HA1 in FIG. 4) disposed between the first housing and the second housing, a second hinge assembly (e.g., the second hinge assembly HA2 in FIG. 4) disposed between the first housing and the third housing, a flexible display (e.g., the flexible display 240 in FIG. 2A) including a first display area (e.g., the first area 240a in FIG. 2A) supported by the first housing, a second display area (e.g., the second area 240b in FIG. 2A) supported by the second housing, and a third display area (e.g., the third area 240c in FIG. 2A) supported by the third housing, and a first front camera (e.g., the first camera 273a in FIG. 2A) disposed in the third display area of the third housing. The flexible display includes a display driving circuit (e.g., the control circuit 4321a in FIG. 9D) configured to drive the flexible display, and the display driving circuit is configured to be disposed in the second display area of the second housing. The usability of the first front camera is improved by being arranged on the third area, compared to arrangement on the other areas. Further, by disposing the display driving circuit in a separated area from the third area where the first front camera is arranged, the multi-folding operation of the electronic device can be effectively supported without incurring damage to each component of the flexible display.

According to various embodiments, the first housing may include a second camera (e.g., the second camera 273b in FIG. 2C) disposed below the flexible display.

According to various embodiments, the second camera may be disposed to face away from the first front camera in the fully unfolded state.

According to various embodiments, the portable communication device may include a fourth display area (e.g., the sub-display 250 in FIG. 2C) disposed in the third housing on an opposite side to the third display area, and a third camera (e.g., the third camera 273c in FIG. 2C) disposed in the fourth display area of the third housing.

According to various embodiments, the third housing may include a side surface (e.g., the seventh side surface 2332 in FIG. 2A) disposed in a direction parallel to the folding axis (e.g., the second folding axis F2 in FIG. 2A) of the second hinge assembly, an upper side surface (e.g., the eighth side surface 2333 in FIG. 2A) extending from one end of the side surface in a direction perpendicular to the side surface, and a lower side surface (e.g., the sixth surface 2331 in FIG. 2A) extending from the other end of the side surface in a direction perpendicular to the side surface, and the first front camera may be disposed near a corner where the side surface and the upper side surface meet.

According to various embodiments, the portable communication device may include a first speaker (e.g., the first speaker 272a in FIG. 11) and a second speaker (e.g., the second speaker 272b in FIG. 11) disposed in the second housing to emit sound through a lower side surface (e.g., the third side surface 2231 in FIG. 2A) and an upper side surface (e.g., the fifth side surface 2233 in FIG. 2A), respectively.

According to various embodiments, the portable communication device may include a third speaker (e.g., the third speaker 272c in FIG. 11) and a fourth speaker (e.g., the fourth speaker 272d in FIG. 11) disposed in the third housing to emit sound through a lower side surface (e.g., the sixth side surface 2331 in FIG. 2A) and an upper side surface (e.g., the eighth side surface 2333 in FIG. 2A), respectively.

According to various embodiments, no camera may be accommodated in the second housing.

According to various embodiments, the first hinge assembly may include a first hinge housing (e.g., the first hinge housing 266 in FIG. 3A), and the second hinge assembly may include a second hinge housing (e.g., the second hinge housing 267 in FIG. 3A). The second hinge housing may have a first width (e.g., the first width W1 in FIG. 3A) greater than the thickness of the first housing, and the first hinge housing may have a second width (e.g., the second width W2 in FIG. 3A) smaller than the first width.

According to various embodiments, the flexible display may include a display panel portion (e.g., the display panel 430 in FIG. 9D) visible in a first direction with respect to each of the first housing, the second housing, and the third housing when the foldable housing is in a fully unfolded state, and an extension panel portion (e.g., the extension 4321 in FIG. 9D) extending from an end of the display panel portion accommodated in the second housing and folded in a second direction opposite to the first direction with respect to the display panel portion to be positioned between the display panel portion and the second housing. The portable communication device may further include a first printed circuit board (PCB) (e.g., the first board 281 in FIG. 8) accommodated in the first housing and a processor (e.g., the first processor 120 in FIG. 1) disposed on the first PCB, and the flexible display may include a flexible printed circuit board (FPCB) (e.g., the flexible board 4322 in FIG. 9D) attached to the extension panel portion, and the display driving circuit may use the FPCB to form an electrical connection with the processor.

According to various embodiments, the portable communication device may include a second PCB (e.g., the second board 282 in FIG. 8) accommodated in the second housing and connected to the FPCB, and a first wiring member (e.g., the first wiring member 284a in FIG. 8) disposed across the first hinge assembly and interconnecting the first PCB and the second PCB.

According to various embodiments, the portable communication device may include a third PCB (e.g., the third board 283 in FIG. 8) accommodated in the third housing, and a second wiring member (e.g., the second wiring member 284a in FIG. 8) disposed across the second hinge assembly and interconnecting the first PCB and the third PCB.

According to various embodiments, the display panel portion may include a deactivated area at a position corresponding to the first front camera.

According to various embodiments, the portable communication device may include a first magnet (e.g., the first magnet M1 and the second magnet M2 in FIG. 7C) disposed in the second housing, and a second magnet (e.g., the third magnet M3 and the fourth magnet M4 in FIG. 7C) disposed in the third housing to be substantially aligned with the first magnet when the foldable housing is in a fully folded state.

According to various embodiments, the portable communication device may include a third magnet (the fifth magnet M5 and the sixth magnet M6 in FIG. 7C) disposed in the first housing, and a fourth magnet (e.g., the seventh magnet M7 and the eighth magnet M8 in FIG. 7C) disposed in the second housing to be aligned with the third magnet when the first housing and the second housing are in the fully folded state.

According to various embodiments, the portable communication device may further include a physical key disposed on a side surface (e.g., the seventh side surface 2332 in FIG. 2A) of the third housing located to be substantially parallel to the first hinge assembly when the foldable housing is in the fully folded state.

According to various embodiments, no physical key may be disposed on a side surface (e.g., the fourth side surface 2232 in FIG. 2A) of the second housing.

According to various embodiments, the flexible display may include a foldable fourth area (e.g., the fourth area 240d in FIG. 2B) interconnecting the first display area and the second display area and corresponding to the first hinge assembly, and a foldable fifth area (e.g., the fifth area 240e in FIG. 2B) interconnecting the first display area and the third display area and corresponding to the second hinge assembly, and the area of the fourth area may be smaller than the area of the fifth area.

According to various embodiments, a first folding width (e.g., the first folding width BW1 in FIG. 2B) of the fourth area may be smaller than a second folding width (e.g., the second folding width BW2 in FIG. 2b) of the fifth area.

According to various embodiments, the portable communication device may include a first battery (e.g., the first battery B1 disposed in the second housing, and a third battery (e.g., the third battery B3 in FIG. 7C) disposed in the third housing, and the third battery may be larger than the first battery and smaller than the second battery.

The embodiments of the disclosure disclosed in this specification and drawings are provided merely to propose specific examples in order to easily describe the technical features according to the embodiments of the disclosure and to help understanding of the embodiments of the disclosure, and are not intended to limit the scope of the embodiments of the disclosure.

## Claims

1. A portable communication device (200) comprising:
a foldable housing comprising a first housing (210), a second housing (220), and a third housing (230);
a first hinge assembly (HA1) rotatably connecting the first housing (210) and the second housing (220) with respect to each other;
a second hinge assembly (HA2) rotatably connecting the first housing (210) and the third housing (230) with respect to each other;
a flexible display (240) comprising a first display area (240a) supported by the first housing (210), a second display area (240b) supported by the second housing (220), and a third display area (240c) supported by the third housing (230); and
a first front camera (273a) disposed in the third housing (230) to photograph a subject in a direction in which the flexible display (240) faces,
wherein the flexible display (240) comprises a display driving circuit (4321a) configured to drive the flexible display (240), and
wherein the display driving circuit (4321a) is configured to be disposed in the second housing (220).

2. The portable communication device (200) of claim 1, wherein the first housing (210) comprises a second camera (273b) disposed below the flexible display (240).

3. The portable communication device (200) of claim 2, wherein the second camera (273b) is disposed to face away from the first front camera (273a) in a fully unfolded state.

4. The portable communication device (200) of any of claims 1 to 3, further comprising:
a fourth display area (250) disposed in the third housing (230) on an opposite side to the third display area (240c); and
a third camera (273c) disposed in the fourth display area (250) of the third housing (230).

5. The portable communication device (200) of any of claims 1 to 4, wherein the third housing (230) comprises a side surface (2332) disposed in a direction parallel to the folding axis F2 of the second hinge assembly (HA2), an upper side surface (2333) extending from one end of the side surface (2332) in a direction perpendicular to the side surface (2332), and a lower side surface (2331) extending from another end of the side surface (2332) in a direction perpendicular to the side surface (2332), and
wherein the first front camera (273a) is disposed near a corner where the side surface and the upper side surface (2333) meet.

6. The portable communication device (200) of any of claims 1 to 5, further comprising:
a first speaker (272a) and a second speaker (272b) disposed in the second housing (220) to emit sound through a lower side surface (2231) and an upper side surface (2233), respectively.

7. The portable communication device (200) of claim 6, further comprising:
a third speaker (272c) and a fourth speaker (272d) disposed in the third housing (230) to emit sound through a lower side surface (2331) and an upper side surface (2333), respectively.

8. The portable communication device (200) of any of claims 1 to 7, wherein no camera is accommodated in the second housing (220).

9. The portable communication device (200) of any of claims 1 to 8, wherein the first hinge assembly (HA1) comprises a first hinge housing (266), and the second hinge assembly (HA2) comprises a second hinge housing (267),
wherein the second hinge housing (267) has a first width (W1) greater than a thickness of the first housing (210), and
wherein the first hinge housing (266) has a second width (W2) smaller than the first width (W1).

10. The portable communication device (200) of any of claims 1 to 9, wherein the flexible display (240) comprises:
a display panel portion (430) visible in a first direction with respect to each of the first housing (210), the second housing (220), and the third housing (230) when the foldable housing is in a fully unfolded state; and
an extension panel portion (4321) extending from an end of the display panel portion (430) accommodated in the second housing (220) and folded in a second direction opposite to the first direction with respect to the display panel portion (430) to be positioned between the display panel portion (430) and the second housing (220),
wherein the portable communication device (200) further comprises a first printed circuit board, PCB, (281) accommodated in the first housing (210) and a processor (120) disposed on the first PCB (281),
wherein the flexible display (240) comprises a flexible printed circuit board, FPCB, (4322) attached to the extension panel portion (4321), and
wherein the display driving circuit (4321a) is configured to form an electrical connection with the processor (120) through the FPCB (4322).

11. The portable communication device (200) of claim 10, further comprising: a second PCB (282) accommodated in the second housing (220) and connected to the FPCB (4322); and
a first wiring member (284a) disposed across the first hinge assembly (HA1) and interconnecting the first PCB (281) and the second PCB (282).

12. The portable communication device (200) of claim 10 or 11, further comprising:
a third PCB (283) accommodated in the third housing (230); and
a second wiring member (284a) disposed across the second hinge assembly (HA2) and interconnecting the first PCB (281) and the third PCB (283).

13. The portable communication device (200) of any of claims 10 to 12, wherein the display panel portion (430) comprises a deactivated area provided in a position corresponding to the first front camera (273a).

14. The portable communication device (200) of any of claims 1 to 13, further comprising:
a first magnet (M1, M2) disposed in the second housing (220); and
a second magnet (M3, M4) disposed in the third housing (230) to be substantially aligned with the first magnet (M1, M2) when the foldable housing is in a fully folded state.

15. The portable communication device (200) of any of claims 1 to 14, further comprising:
a third magnet (M5, M6) disposed in the first housing (210); and
a fourth magnet (M7, M8) disposed in the second housing (220) to be aligned with the third magnet (M5, M6) when the first housing (210) and the second housing (220) are in the fully folded state.

## Patentansprüche

1. Tragbare Kommunikationsvorrichtung (200), umfassend:
ein klappbares Gehäuse, das ein erstes Gehäuse (210), ein zweites Gehäuse (220) und ein drittes Gehäuse (230) umfasst;
eine erste Scharnieranordnung (HA1), die das erste Gehäuse (210) und das zweite Gehäuse (220) relativ zueinander drehbar verbindet;
eine zweite Scharnieranordnung (HA2), die das erste Gehäuse (210) und das dritte Gehäuse (230) relativ zueinander drehbar verbindet;
eine flexible Anzeige (240), die einen ersten Anzeigebereich (240a), der vom ersten Gehäuse (210) abgestützt wird, einen zweiten Anzeigebereich (240b), der vom zweiten Gehäuse (220) abgestützt wird, und einen dritten Anzeigebereich (240c), der vom dritten Gehäuse (230) abgestützt wird, umfasst; und
eine erste Frontkamera (273a), die im dritten Gehäuse (230) angeordnet ist, um einen Gegenstand in einer Richtung zu fotografieren, in die die flexible Anzeige (240) zeigt,
wobei die flexible Anzeige (240) eine Anzeige-Ansteuerschaltung (4321a) umfasst, die zum Ansteuern der flexiblen Anzeige (240) konfiguriert ist, und
wobei die Anzeige-Ansteuerschaltung (4321a) so konfiguriert ist, dass sie im zweiten Gehäuse (220) angeordnet ist.

2. Tragbare Kommunikationsvorrichtung (200) nach Anspruch 1, wobei das erste Gehäuse (210) eine zweite Kamera (273b) umfasst, die unterhalb der flexiblen Anzeige (240) angeordnet ist.

3. Tragbare Kommunikationsvorrichtung (200) nach Anspruch 2, wobei die zweite Kamera (273b) so angeordnet ist, dass sie in einem vollständig entfalteten Zustand von der ersten Frontkamera (273a) weg zeigt.

4. Tragbare Kommunikationsvorrichtung (200) nach einem der Ansprüche 1 bis 3, umfassend ferner:
einen vierten Anzeigebereich (250), der im dritten Gehäuse (230) auf einer dem dritten Anzeigebereich (240c) gegenüberliegenden Seite angeordnet ist; und
eine dritte Kamera (273c), die im vierten Anzeigebereich (250) des dritten Gehäuses (230) angeordnet ist.

5. Tragbare Kommunikationsvorrichtung (200) nach einem der Ansprüche 1 bis 4, wobei das dritte Gehäuse (230) eine Seitenfläche (2332), die in einer Richtung parallel zur Faltachse F2 der zweiten Scharnieranordnung (HA2) angeordnet ist, eine obere Seitenfläche (2333), die sich von einem Ende der Seitenfläche (2332) in einer Richtung senkrecht zur Seitenfläche (2332) erstreckt, und eine untere Seitenfläche (2331) umfasst, die sich von einem weiteren Ende der Seitenfläche (2332) in einer Richtung senkrecht zur Seitenfläche (2332) erstreckt, und
wobei die erste Frontkamera (273a) in der Nähe einer Ecke angeordnet ist, an der die Seitenfläche und die obere Seitenfläche (2333) aufeinandertreffen.

6. Tragbare Kommunikationsvorrichtung (200) nach einem der Ansprüche 1 bis 5, umfassend ferner:
einen ersten Lautsprecher (272a) und einen zweiten Lautsprecher (272b), die im zweiten Gehäuse (220) angeordnet sind, um Schall jeweils durch eine untere Seitenfläche (2231) bzw. eine obere Seitenfläche (2233) abzugeben.

7. Tragbare Kommunikationsvorrichtung (200) nach Anspruch 6, umfassend ferner:
einen dritten Lautsprecher (272c) und einen vierten Lautsprecher (272d), die im dritten Gehäuse (230) angeordnet sind, um Schall jeweils durch eine untere Seitenfläche (2331) bzw. eine obere Seitenfläche (2333) abzugeben.

8. Tragbare Kommunikationsvorrichtung (200) nach einem der Ansprüche 1 bis 7, wobei im zweiten Gehäuse (220) keine Kamera untergebracht ist.

9. Tragbare Kommunikationsvorrichtung (200) nach einem der Ansprüche 1 bis 8, wobei die erste Scharnieranordnung (HA1) ein erstes Scharniergehäuse (266) und die zweite Scharnierbaugruppe (HA2) ein zweites Scharniergehäuse (267) umfasst,
wobei das zweite Scharniergehäuse (267) eine erste Breite (W1) aufweist, die größer ist als eine Dicke des ersten Gehäuses (210), und
wobei das erste Scharniergehäuse (266) eine zweite Breite (W2) aufweist, die kleiner ist als die erste Breite (W1).

10. Tragbare Kommunikationsvorrichtung (200) nach einem der Ansprüche 1 bis 9, wobei die flexible Anzeige (240) Folgendes umfasst:
einen Anzeigepanelabschnitt (430), der in einer ersten Richtung in Bezug auf das erste Gehäuse (210), das zweite Gehäuse (220) und das dritte Gehäuse (230) sichtbar ist, wenn sich das faltbare Gehäuse in einem vollständig entfalteten Zustand befindet; und
einen Verlängerungspanelabschnitt (4321), der sich von einem Ende des im zweiten Gehäuse (220) untergebrachten Anzeigepanelabschnitts (430) erstreckt und in einer zweiten Richtung entgegengesetzt zur ersten Richtung in Bezug auf den Anzeigepanelabschnitt (430) gefaltet ist, um zwischen dem Anzeigepanelabschnitt (430) und dem zweiten Gehäuse (220) positioniert zu werden,
wobei die tragbare Kommunikationsvorrichtung (200) ferner eine erste Leiterplatte, PCB, (281), die im ersten Gehäuse (210) untergebracht ist, und einen Prozessor (120) umfasst, der auf der ersten PCB (281) angeordnet ist,
wobei die flexible Anzeige (240) eine flexible Leiterplatte, FPCB, (4322) umfasst, die an dem Verlängerungspanelabschnitt (4321) angebracht ist, und
wobei die Anzeige-Ansteuerschaltung (4321a) dazu konfiguriert ist, über die FPCB (4322) eine elektrische Verbindung mit dem Prozessor (120) herzustellen.

11. Tragbare Kommunikationsvorrichtung (200) nach Anspruch 10, umfassend ferner:
eine zweite PCB (282), die in dem zweiten Gehäuse (220) untergebracht und mit der FPCB (4322) verbunden ist; und
ein erstes Verdrahtungselement (284a), das über die erste Scharnieranordnung (HA1) angeordnet ist und die erste PCB (281) und die zweite PCB (282) miteinander verbindet.

12. Tragbare Kommunikationsvorrichtung (200) nach Anspruch 10 oder 11, umfassend ferner:
eine dritte PCB (283), die in dem dritten Gehäuse (230) untergebracht ist; und
ein zweites Verdrahtungselement (284a), das über die zweite Scharnieranordnung (HA2) angeordnet ist und die erste PCB (281) und die dritte PCB (283) miteinander verbindet.

13. Tragbare Kommunikationsvorrichtung (200) nach einem der Ansprüche 10 bis 12, wobei der Anzeigepanelabschnitt (430) einen deaktivierten Bereich umfasst, der an einer der ersten Frontkamera (273a) entsprechenden Position vorgesehen ist.

14. Tragbare Kommunikationsvorrichtung (200) nach einem der Ansprüche 1 bis 13, umfassend ferner:
einen ersten Magneten (M1, M2), der im zweiten Gehäuse (220) angeordnet ist; und
einen zweiten Magneten (M3, M4), der im dritten Gehäuse (230) so angeordnet ist, dass er im Wesentlichen mit dem ersten Magneten (M1, M2) ausgerichtet ist, wenn sich das faltbare Gehäuse in einem vollständig gefalteten Zustand befindet.

15. Tragbare Kommunikationsvorrichtung (200) nach einem der Ansprüche 1 bis 14, umfassend ferner:
einen dritten Magneten (M5, M6), der in dem ersten Gehäuse (210) angeordnet ist; und
einen vierten Magneten (M7, M8), der in dem zweiten Gehäuse (220) so angeordnet ist, dass er mit dem dritten Magneten (M5, M6) ausgerichtet ist, wenn sich das erste Gehäuse (210) und das zweite Gehäuse (220) im vollständig gefalteten Zustand befinden.

## Revendications

1. Dispositif de communication portable (200) comprenant :
un boîtier pliable comprenant un premier boîtier (210), un deuxième boîtier (220) et un troisième boîtier (230) ;
un premier ensemble de charnière (HA1) reliant de manière rotative le premier boîtier (210) et le deuxième boîtier (220) l'un par rapport à l'autre ;
un deuxième ensemble de charnière (HA2) reliant de manière rotative le premier boîtier (210) et le troisième boîtier (230) l'un par rapport à l'autre ;
un affichage flexible (240) comprenant une première zone d'affichage (240a) supportée par le premier boîtier (210), une deuxième zone d'affichage (240b) supportée par le deuxième boîtier (220) et une troisième zone d'affichage (240c) supportée par le troisième boîtier (230) ; et
une première caméra frontale (273a) disposée dans le troisième boîtier (230) pour photographier un sujet dans une direction vers laquelle l'affichage flexible (240) fait face,
dans lequel l'affichage flexible (240) comprend un circuit de commande d'affichage (4321a) configuré pour commander l'affichage flexible (240), et
dans lequel le circuit de commande d'affichage (4321a) est configuré pour être disposé dans le deuxième boîtier (220).

2. Dispositif de communication portable (200) selon la revendication 1, dans lequel le premier boîtier (210) comprend une deuxième caméra (273b) disposée au-dessous de l'affichage flexible (240).

3. Dispositif de communication portable (200) selon la revendication 2, dans lequel la deuxième caméra (273b) est disposée de manière à faire face à l'opposé de la première caméra frontale (273a) dans un état entièrement déplié.

4. Dispositif de communication portable (200) selon l'une quelconque des revendications 1 à 3, comprenant en outre :
une quatrième zone d'affichage (250) disposée dans le troisième boîtier (230) sur un côté opposé à la troisième zone d'affichage (240c) ; et
une troisième caméra (273c) disposée dans la quatrième zone d'affichage (250) du troisième boîtier (230).

5. Dispositif de communication portable (200) selon l'une quelconque des revendications 1 à 4, dans lequel le troisième boîtier (230) comprend une surface latérale (2332) disposée dans une direction parallèle à l'axe de pliage F2 du deuxième ensemble de charnière (HA2), une surface latérale supérieure (2333) s'étendant depuis une extrémité de la surface latérale (2332) dans une direction perpendiculaire à la surface latérale (2332), et une surface latérale inférieure (2331) s'étendant depuis une autre extrémité de la surface latérale (2332) dans une direction perpendiculaire à la surface latérale (2332), et
dans lequel la première caméra frontale (273a) est disposée à proximité d'un coin où la surface latérale et la surface latérale supérieure (2333) se rencontrent.

6. Dispositif de communication portable (200) selon l'une quelconque des revendications 1 à 5, comprenant en outre :
un premier haut-parleur (272a) et un deuxième haut-parleur (272b) disposés dans le deuxième boîtier (220) pour émettre un son à travers une surface latérale inférieure (2231) et une surface latérale supérieure (2233), respectivement.

7. Dispositif de communication portable (200) selon la revendication 6, comprenant en outre :
un troisième haut-parleur (272c) et un quatrième haut-parleur (272d) disposés dans le troisième boîtier (230) pour émettre un son à travers une surface latérale inférieure (2331) et une surface latérale supérieure (2333), respectivement.

8. Dispositif de communication portable (200) selon l'une quelconque des revendications 1 à 7, dans lequel aucune caméra n'est logée dans le deuxième boîtier (220).

9. Dispositif de communication portable (200) selon l'une quelconque des revendications 1 à 8, dans lequel le premier ensemble de charnière (HA1) comprend un premier boîtier de charnière (266), et le deuxième ensemble de charnière (HA2) comprend un deuxième boîtier de charnière (267),
dans lequel le deuxième boîtier de charnière (267) a une première largeur (W1) supérieure à une épaisseur du premier boîtier (210), et
dans lequel le premier boîtier de charnière (266) a une deuxième largeur (W2) inférieure à la première largeur (W1).

10. Dispositif de communication portable (200) selon l'une quelconque des revendications 1 à 9, dans lequel l'affichage flexible (240) comprend :
une partie de panneau d'affichage (430) visible dans une première direction par rapport à chacun du premier boîtier (210), du deuxième boîtier (220) et du troisième boîtier (230) lorsque le boîtier pliable est dans un état entièrement déplié ; et
une partie de panneau d'extension (4321) s'étendant depuis une extrémité de la partie de panneau d'affichage (430), logée dans le deuxième boîtier (220) et pliée dans une deuxième direction opposée à la première direction par rapport à la partie de panneau d'affichage (430) pour être positionnée entre la partie de panneau d'affichage (430) et le deuxième boîtier (220),
dans lequel le dispositif de communication portable (200) comprend en outre une première carte de circuit imprimé, PCB, (281) logée dans le premier boîtier (210) et un processeur (120) disposé sur la première PCB (281),
dans lequel l'affichage flexible (240) comprend une carte de circuit imprimé flexible, FPCB, (4322) fixée à la partie de panneau d'extension (4321), et
dans lequel le circuit de commande d'affichage (4321a) est configuré pour former une connexion électrique avec le processeur (120) par l'intermédiaire de la FPCB (4322).

11. Dispositif de communication portable (200) selon la revendication 10, comprenant en outre :
une deuxième PCB (282) logée dans le deuxième boîtier (220) et connectée à la FPCB (4322) ; et
un premier élément de câblage (284a) disposé à travers le premier ensemble de charnière (HA1) et interconnectant la première PCB (281) et la deuxième PCB (282).

12. Dispositif de communication portable (200) selon la revendication 10 ou 11, comprenant en outre :
une troisième PCB (283) logée dans le troisième boîtier (230) ; et
un deuxième élément de câblage (284a) disposé à travers le deuxième ensemble de charnière (HA2) et interconnectant la première PCB (281) et la troisième PCB (283).

13. Dispositif de communication portable (200) selon l'une quelconque des revendications 10 à 12, dans lequel la partie de panneau d'affichage (430) comprend une zone désactivée prévue dans une position correspondant à la première caméra frontale (273a).

14. Dispositif de communication portable (200) selon l'une quelconque des revendications 1 à 13, comprenant en outre :
un premier aimant (M1, M2) disposé dans le deuxième boîtier (220) ; et
un deuxième aimant (M3, M4) disposé dans le troisième boîtier (230) de manière à être sensiblement aligné avec le premier aimant (M1, M2) lorsque le boîtier pliable est dans un état entièrement plié.

15. Dispositif de communication portable (200) selon l'une quelconque des revendications 1 à 14, comprenant en outre :
un troisième aimant (M5, M6) disposé dans le premier boîtier (210) ; et
un quatrième aimant (M7, M8) disposé dans le deuxième boîtier (220) de manière à être aligné avec le troisième aimant (M5, M6) lorsque le premier boîtier (210) et le deuxième boîtier (220) sont dans l'état entièrement plié.
